# EUROPÄISCHE PATENTSCHRIFT

(11) **EP 2 736 822 B1**
(45) Veröffentlichungstag und Bekanntmachung des Hinweises auf die Patenterteilung: **13.01.2016**
(21) Anmeldenummer: 12743647.5
(22) Anmeldetag: 19.07.2012
(51) Int. Cl.: B65G 15/60, B65G 23/22, B60P 1/38

(54) **FÖRDEREINRICHTUNG MIT EINEM FLÄCHIG AUSGEDEHNTEN FÖRDERORGAN**
CONVEYING DEVICE WITH A PLANAR CONVEYING ELEMENT
DISPOSITIF TRANSPORTEUR DOTÉ D'UN ORGANE TRANSPORTEUR S'ÉTENDANT À PLAT

(30) Priorität: 29.07.2011 CH 12682011; 18.01.2012 CH 85122012
(43) Veröffentlichungstag der Anmeldung: 04.06.2014
(73) Patentinhaber: WRH Walter Reist Holding AG, 8272 Ermatingen (CH)
(72) Erfinder: WEHNER, Jürgen, 8623 Wetzikon (CH)
(74) Vertreter: Frei Patent Attorneys
(86) Internationale Anmeldenummer: PCT/CH2012/000169
(87) Internationale Veröffentlichungsnummer: WO 2013/016833

(56) Entgegenhaltungen:
- CH-A1- 701 358
- DE-A1- 10 303 195
- DE-A1-102006 004 421
- DE-A1-102006 053 913
- DE-A1-102007 017 628
- DE-U1- 9 316 012
- FR-A1- 2 420 492
- GB-A- 383 463

## Beschreibung

Die Erfindung bezieht sich auf das Gebiet der Fördertechnik und betrifft eine Fördereinrichtung nach dem Oberbegriff des Anspruchs 1.

### STAND DER TECHNIK

Fördereinrichtungen mit einem umlaufenden, flächig ausgedehnten Förderorgan wie Förderband oder Mattenkette sind im Stand der Technik bekannt. Die Förderorgane werden in der Regel an einer oder zwei Umlenkstellen mittels einer Umlenkwelle angetrieben. Zur Abstützung der Förderorgane im Bereich des oberen Trums, auf welchem das Fördergut aufliegt, werden diese zwischen den Umlenkstellen z. B. auf Gleitschienen gleitend geführt. Es sind auch Fördereinrichtungen bekannt, bei welchen das Förderorgan zwischen den Umlenkstellen auf Rollenkörpern abrollt. Eine solche Fördereinrichtung ist z. B. in der WO 2010/148523 offenbart.

Die genannten Fördereinrichtungen finden beispielsweise als Werker-Mitfahrbänder Verwendung. Die Bauhöhe solcher Mitfahrbänder sollte jedoch nicht allzu gross sein. So sind heute Fördereinrichtungen gebräuchlich, die für solch spezifischen Anwendungen Bauhöhen von maximal 120 mm bis 170 mm aufweisen, wobei in diesem Mass auch die freie Höhe zwischen Bodenauflage und dem unteren Trum des Förderorgan miteinbezogen ist. Die vergleichsweise geringe Bauhöhe stellt jedoch eine Herausforderung in Bezug auf die Auslegung und Konstruktion der Antriebsvorrichtung dar.

Die DE-C-44 07 163 beschreibt eine gattungsgemässe Fördereinrichtung mit einem um zwei Umlenkachsen umlaufenden Förderband. Das Förderband wird über eine der Umlenkachsen angetrieben, wobei der Antriebsmotor ausserhalb des angetriebenen Förderbandes angeordnet ist. Die Umlenkachse wird über ein Getriebe mit Kettenantrieb angetrieben. Da auch Fördereinrichtungen der genannten Art möglichst kompakt und Platz sparend konstruiert sein sollen, ist es selbsterklärend, dass die Antriebseinheiten mit Antriebsmotor und Getriebe zwischen dem oberen und unteren Trum des Förderorgans sowie zwischen den Seitenabschlussvorrichtungen angeordnet sein sollten.

Die DE-U-93 16 012 befasst sich ebenfalls mit der Problematik des beschränkten Raumes zwischen dem Förder- und Umlenkabschnitt des umlaufend geführten Förderbandes einer Fördereinrichtung. Das Förderband umschlingt im Umlenkabschnitt ein Antriebsrad. Der Antriebsmotor ist zwischen dem oberen und unteren Trum des Förderorgans sowie zwischen der Seitenabschlussvorrichtung angeordnet.

Aus Platzgründen liegt die Antriebswelle der Antriebseinheit rechtwinklig zur Drehachse des Antriebsrades. Die Drehmomentübertragung geschieht über ein Getriebe mit Kegelrad. Das Förderband ist zwischen den Umlenkbereichen über Seitenwangen gleitend geführt.

Die DE 1 887 279 beschreibt eine gattungsgemässe Fördereinrichtung mit einem umlaufenden, flächig ausgedehnten Förderorgan, welches über eine Umlenkachse angetrieben wird. Der Antriebsmotor ist zwischen den beiden Umlenkbereichen innerhalb der Fördereinrichtung angeordnet, wobei die Einrichtung ein Getriebe mit Antriebsriemen zur Übertragung des Drehmomentes von der Motorwelle auf die angetriebene Umlenkachse aufweist.

Auch die DE 1 060 782 beschreibt eine gattungsgemässe Fördereinrichtung mit einem umlaufenden, flächig ausgedehnten Förderorgan, welches über zwei voneinander beabstandete Umlenkstellen geführt ist. Das Förderorgan wird hier im Unterschied zu den oben beschriebenen Lösungen nicht im Bereich der Umlenkung sondern im Bereich des Förder- und Rückführabschnittes über eine Formschlussverbindung mit jeweils einem Antriebsorgan angetrieben. Die Antriebsorgane werden durch einen Antriebsmotor angetrieben, welcher zwischen den Umlenkstellen innerhalb der Fördereinrichtung angeordnet ist.

Die DE 10 2006 010 974 beschreibt eine Fördervorrichtung umfassend ein Förderband sowie einen im Wesentlichen horizontalen Führungsrahmen mit zwei seitlichen, sich horizontal in Längsrichtung des Förderbandes erstreckenden Seitenwangen, an deren Enden eine durch einen Antrieb antreibbare Umlenkrolle für das Förderband drehbar gelagert ist. Der Antrieb ist zwischen den beiden Seitenwangen angeordnet.

Die DE 103 03 195 A1 beschreibt eine Fördervorrichtung zum Transportieren von Behältnissen in Reinräumen, welche Wafer aufnehmen. Die Transportvorrichtung umfasst zwei voneinander beabstandete und angrenzend zu zwei Seitenabschlussvorrichtungen angeordnete, schmale Riemen, welche über Stützrollen, die an den Seitenabschlussvorrichtungen angebracht sind, abgestützt werden. Der Antriebsmotor ist zwischen den Seitenabschlussvoriichtungen angeordnet.

Die DE 10 2007 017 628 A1 beschreibt eine gattungsgemäße Fördereinrichtung mit einem Förderband mit einem horizontalen Führungsrahmen sowie mit Umlenkrollen in den Endbereichen, wobei eine der Umlenkrollen durch Antriebsmittel angetrieben wird.

Die DE 10 2006 004 421 A1 beschreibt einen Bandförderer mit einem Trommelmotor, welcher das Förderband des Bandförderers in einem Umlenkbereich antreibt. Der Trommelmotor weist eine Achse und einen sich drehenden Mantel auf, welcher das Förderband antreibt.

Die DE 93 16 012 U1 beschreibt einen Bandförderer mit zwei Umlenkabschnitten. Das Förderband umschlingt in einem Umlenkabschnitt ein Antriebsrad für den Bandantrieb, welches mittels einer Antriebseinheit angetrieben ist. Die Antriebseinheit für das Antriebsrad ist im Wesentlichen in dem durch den Förder- und Rücklaufabschnitt des Förderbandes und den beiden Umlenkabschnitten begrenzten Raum angeordnet.

Die im Stand der Technik bekannten Lösungen weisen jedoch Nachteile auf. So sind Antriebseinheiten, welche innerhalb der Fördervorrichtung angeordnet sind, aufgrund ihrer notgedrungen kompakten Ausgestaltung in der Regel zu leistungsschwach, um in herkömmlicher Konstruktionsweise ausgelegte Fördervorrichtungen zufriedenstellend anzutreiben.

### DARSTELLUNG DER ERFINDUNG

Es ist deshalb Aufgabe der Erfindung, eine Fördereinrichtung der eingangs genannten Art vorzuschlagen, welche die oben genannten Nachteile behebt. Die Aufgabe wird durch die Merkmale des unabhängigen Anspruchs 1 gelöst. Weitere bevorzugte Ausführungsformen und Weiterbildungen der Erfindung gehen aus den abhängigen Patentansprüchen hervor.

Die Erfindung wird durch die Merkmale des unabhängigen Anspruchs 1 gelöst.

Die Rollen können in der Abstützvorrichtung und/oder im Förderorgan vorgesehen sein.

Die Antriebsvorrichtung kann einen, zwei, drei oder mehr als drei Antriebsmotoren enthalten. Die Antriebsmotoren sind bevorzugt in Richtung Drehachse der Antriebswellen betrachtet hintereinander angeordnet. Die Motorwellen der Antriebsmotoren sind bevorzugt axial ebenfalls hintereinander angeordnet und bilden, insbesondere auch mit den Antriebswellen, eine gemeinsame Drehachse aus.

Die Antriebsvorrichtung enthält mehrere Antriebswellen, wobei die Antriebswellen bevorzugt axial hintereinander angeordnet sind und eine gemeinsame Drehachse ausbilden.

Die geometrischen Drehachsen der Motorwelle und der Antriebswellen bzw. sämtlicher Motorwellen und Antriebswellen sind bevorzugt in einer gemeinsamen Ebene angeordnet. Diese Ebene liegt beispielsweise parallel zur Förderebene. Die geometrischen Drehachsen der Motorwelle und der Antriebswellen bzw. sämtlicher Motorwellen und Antriebswellen sind insbesondere kongruent zueinander angeordnet. Die Motorwelle und die Antriebswellen können hierzu insbesondere koaxial zueinander angeordnet sein.

Die nachfolgenden Ausführungen im Zusammenhang mit dem Antriebsmotor, insbesondere mit dessen Motorwelle, können auf einen, zwei, drei oder mehr als drei bzw. auf sämtliche Antriebsmotoren zutreffen. Die nachfolgenden Ausführungen im Zusammenhang mit der Antriebswelle treffen auf mehrere bzw. auf sämtliche Antriebswellen zu.

Die Kopfendbereiche entsprechend den Endabschnitten des Förderorgans, in welchem der obere und untere Trum über ein Umlenkorgan jeweils in eine Umlenkung geführt werden. Die Kopfenden, als Teil der Kopfendbereiche, entsprechen, parallel zur Förderrichtung betrachtet, dem äussersten Punkt des Förderorgans in der Umlenkung.

Die mindestens eine im Kopfendbereich angeordnete Antriebsvorrichtung überträgt die Antriebskraft über ein an der Antriebswelle befestigtes Antriebsorgan direkt auf das Förderorgan.

Das Förderorgan wird im Kopfendbereich bevorzugt um einen Winkel von grösser 135° (Winkelgrade), insbesondere von 180° oder grösser umgelenkt. Die Umlenkung bewirkt insbesondere eine Umkehr der Bewegungsrichtung des Förderorgans.

Gemäss einer ersten Ausführungsform der Erfindung ist der Antriebsmotor zum Abgreifen eines Drehmomentes von zwei einander gegenüber liegenden und in einer gemeinsamen Achse liegenden Stellen am Antriebsmotor ausgelegt. Der Antriebsmotor ist über die Abtriebswellen direkt oder indirekt mit beidseitig angeordneten Antriebswellen gekoppelt. Der Antriebsmotor weist insbesondere beidseitig von diesem wegführende Motorwellenabschnitte auf, welche direkt oder indirekt mit beidseitig angeordneten Antriebswellen gekoppelt sind.

Die Antriebswelle kann zentrisch in der geometrischen Drehachse der Antriebsvorrichtung angeordnet und drehbar gelagert sein.

Der Antriebsmotor kann auch ein Trommelmotor sein. Dieser ist jedoch nicht Gegenstand vorliegender Patentansprüche. Die Antriebswelle ist in diesem Fall eine Hohlwelle, welche drehbar um eine drehfest und zentrisch in der geometrischen Drehachse der Antriebsvorrichtung angeordnete Motorachse gelagert ist. Die Motorachse ist drehmomentgesichert. Trommelmotoren sind insbesondere für einen reibschlüssigen Antrieb von Förderbändern geeignet. Aufgrund ihres Leistungsspektrums sind sie insbesondere für kleinere Fördereinrichtungen, wie Kurvenförderer, geeignet.

Der Antriebsmotor kann grundsätzlich ein Synchron-, Asynchron- oder Gleichstrommotor sein. Bevorzugt ist der Antriebsmotor ein bürstenloser Gleichstrommotor (BLDC-Motor).

Der Antriebsmotor enthält bevorzugt einen Mikrocontroller zur Ausführung von Motorsteuerungsfunktionen. Der Antriebsmotor kann insbesondere einen elektronischen Speed Controller zur Steuerung der Drehzahl und/oder als dynamische Bremse enthalten (in Englisch: electronic speed control oder ESC).

Die Antriebsversorgungsspannung und die Elektronikversorgungsspannung, welche beide vorzugsweise 24 V betragen, werden bevorzugt über zwei separate Netzteile bereitgestellt.

Der grösste Durchmesser des Antriebsmotors, inkl. Motorgehäuse, kann zum Beispiel 50 bis 100 mm, insbesondere 55 bis 70 mm betragen.

Die Steuersignale können von der Steuerungseinheit als Digital- oder Analogsignale zum Antriebsmotor gesendet werden. Die Steuersignale sind bevorzugt Digitalsignale. Hierzu weist der Antriebsmotor z. B. eine CAN-Bus Schnittstelle auf, welche über einen Signaleingang und -ausgang verfügt.

Gemäss einer bevorzugten Weiterbildung der Erfindung ist beidseits vom Antriebsmotor zwischen der Antriebswelle und dem Antriebsmotor jeweils eine Getriebeeinheit an den Antriebsmotor angebracht, welche das Drehmoment von der Motorwelle abnimmt. Die Getriebewellen der Getriebeeinheiten sind direkt oder indirekt mit den anschliessenden Antriebswellen verbunden.

Die Getriebeeinheiten können grundsätzlich als Montagemodule ausgebildet sein. Sie können, z. B. über Schraubverbindungen, gegebenenfalls koaxial, an den Antriebsmotor angeflanscht sein. Die beiden Getriebewellen der Getriebeeinheiten sind gegebenenfalls koaxial zu den Motorwellen und den Antriebswellen angeordnet.

Es ist auch möglich, dass das bzw. die Getriebe bereits im Antriebsmotor integriert ist und beidseits vom Antriebsmotor Getriebewellen bzw. Abtriebwellen zu den Antriebswellen hin wegführen. Es ist ferner auch möglich, dass sich der Antriebsmotor als Direktantrieb ein einem optimalen Drehzahlbereich betreiben lässt und daher kein (Übersetzungs-) Getriebe notwendig ist.

Gemäss einer besonderen Ausführungsform sind Mittel vorgesehen, welche erlauben, die entlang der Drehachse der Antriebsvorrichtung angeordneten Antriebsorgane mit unterschiedlichen Winkelgeschwindigkeiten zu betreiben. Die Mittel, wie z. B. Übersetzungsgetriebe, können in die Antriebsorgane integriert sein. Es ist insbesondere möglich dass einem, mehreren oder sämtlichen Antriebsorganen ein Übersetzungsgetriebe zugeordnet ist. Dieses Übersetzungsgetriebe kann direkt in das jeweilige Antriebsorgan integriert sein. Das Übersetzungsgetriebe ist beispielsweise ein Planetengetriebe mit, um ein Sonnenrad angeordneten Planetenrädern, welche auf einem Planetenradträger angeordnet sind. Das Antriebsorgan bildet hierbei bevorzugt ein Hohlrad mit Innenverzahnung aus, welche mit den Planetenrädern zusammenwirkt. Ferner weist das Hohlrad bevorzugt eine Aussenverzahnung für einen formschlüssigen Antrieb oder eine Antriebsmantelfläche für einen reibschlüssigen Antrieb des Förderorgans aus. Das Planetengetriebe kann eine Unter- oder Übersetzung sein. Das Planetengetriebe wird bevorzugt über das Sonnenrad angetrieben.

Beidseits vom Antriebsmotor, zwischen dem Antriebsmotor und der jeweiligen Antriebswelle und insbesondere zwischen einer Getriebeeinheit und der Antriebswelle ist bevorzugt eine dreh- und/oder biegeelastische Wellenkupplung angeordnet. Die Wellenkupplung verbindet bevorzugt eine Antriebswelle mit der Getriebewelle der Getriebeeinheit bzw. mit der Motorwelle des Antriebsmotors.

Die Wellenkupplung besteht bevorzugt aus zwei Kupplungshälften und einem elastischen Zwischenring, wobei die Wellenkupplung eine formschlüssige Drehmomentübertragung erlaubt. Die Kupplungshälften sind z. B. als Klauen ausgebildet. Bevorzugt wird eine Wellenkupplung des Typs TRASCO® eingesetzt. Die Wellenkupplung erlaubt eine sichere Kraftübertragung bei Verringerung von Stössen und Drehschwingungen. Ferner kompensiert die Wellenkupplung Winkel- und Radialfehler und ermöglicht geringe Axialverschiebungen. Die Kupplung eignet sich auch für einen Betrieb in zwei Förderrichtungen, das heisst mit entgegen gesetzten Drehrichtungen der Antriebswellen.

Gemäss einer weiteren Ausführungsform ist der Antriebsmotor so angeordnet, dass die Drehachse der Motorwelle in einem Winkel zur Drehachse der Antriebswellen des Antriebsorgans liegt. Das Drehmoment wird hier über ein Winkelgetriebe von der Motorwelle auf die beidseitig angeordneten Antriebswellen übertragen. Das Winkelgetriebe kann ein Kegelradgetriebe, ein Schneckengetriebe oder ein Hypoidgetriebe sein.

Die Drehachsen der Motorwelle und der Getriebewellen bzw. Antriebswellen können einen Winkel von grösser 0° (Winkelgrad) bis und mit 90° einschliessen. Bevorzugt schliessen sie einen Winkel von 90° ein.

Das Winkelgetriebe kann Teil einer Getriebeeinheit sein, welche zum Kopfende hin an den Antriebsmotor anschliesst oder in diesen integriert ist.

Die Motor- bzw. Abtriebswelle des Antriebsmotors führt hierzu in die Getriebeeinheit. Getriebewellen führen beidseitig in einem Winkel, insbesondere in einem Rechten Winkel zur Motor- bzw. Abtriebswelle aus der Getriebeeinheit heraus zu den Antriebsorganen hin. Beidseitig wegführende Getriebewellen verlaufen zweckmässig parallel und insbesondere koaxial zueinander. Gemäss dieser Variante ist der Antriebsmotor bevorzugt mittig in der Antriebsvorrichtung und entsprechend mittig zwischen den beiden Seitenabschlussvorrichtungen angeordnet.

Zwischen der Getriebeeinheit und der Antriebswelle ist auch hier bevorzugt eine dreh- und/oder biegeelastische Wellenkupplung angeordnet. Die Wellenkupplung verbindet eine Antriebswelle des Antriebsorgans mit der Getriebewelle der Getriebeeinheit. Die Wellenkupplung kann gemäss der voran gehenden Beschreibung ausgerührt sein.

Enthält die Antriebsvorrichtung mehrere Antriebsmotoren, so sind diese vorzugsweise derart nebeneinander angeordnet, dass die Drehachsen der Motorwellen parallel zueinander verlaufen.

Das Antriebsorgan ist ebenfalls koaxial zur Antriebswelle und gegebenenfalls auch koaxial zur Motorwelle angeordnet. Das Antriebsorgan ist bevorzugt eine drehfest und koaxial an der Antriebswelle angebrachte Antriebsrolle oder ein Antriebszahnrad. Bevorzugt sind jeweils beidseits vom Antriebsmotor wenigstens ein, vorzugsweise wenigstens zwei Antriebsorgane vorgesehen. Die Antriebsorgane sind bevorzugt auf die Antriebswelle aufgeschoben und über entsprechende Sicherungsmittel sowohl axial gesichert als auch drehgesichert.

Die Antriebswellen sind jeweils mit ihrem freien Ende beidseits der Antriebsvorrichtung an einer Seitenabschlussvorrichtung drehgelagert. Hierzu ist an der Seitenabschlussvorrichtung jeweils eine Lagereinheit angebracht, in welcher das freie Ende der Antriebswelle frei drehbar, jedoch axial gesichert gelagert ist. Die Lagereinheit ist bevorzugt ein Kugellager.

Die Antriebsvorrichtung, welche einen oder mehrere Antriebsmotoren, die Antriebswellen und ggf. Wellenkupplungen und eine oder mehrere Getriebeeinheiten, sowie Kugellager beinhaltet, ist grundsätzlich bevorzugt als Montageeinheit ausgebildet. Die Montageeinheit ist vormontiert und wird in der Endmontage komplett in die Fördereinrichtung eingebaut. Dies geschieht, indem die Antriebsvorrichtung, beispielsweise von oben oder von vorne, zwischen die Seitenabschlussvorrichtungen eingeführt, in Position gebracht und arretiert wird. Entsprechend ist die Antriebsvorrichtung bevorzugt auch wieder ausbaubar, indem diese nach Entfernen des Antriebsorgans, z. B. nach oben, aus den Seitenabschlussvorrichtungen gehoben werden kann. Die Antriebsvorrichtung wird bevorzugt über die seitlichen Kugellager, welche Teil der Montageeinheit sind, in entsprechende Führungen in den Seitenabschlussvorrichtungen eingeführt. Die Führungen in den Seitenabschlussvorrichtungen können Gleitführungen sein.

Die Seitenabschlussvorrichtung, welche z. B. seitliche Längsprofile umfasst, kann Teil eines Stützrahmens sein. Die Seitenabschlussvorrichtung fasst insbesondere die Fördereinrichtung seitlich ein. Die Seitenabschlussvorrichtung kann zusammen mit einer Kopfendabschlussvorrichtung, welche z. B. Querprofile umfasst, einen Stütz- bzw. Tragrahmen ausbilden.

Gemäss einer besonderen Weiterbildung der ersten Ausführungsform der Erfindung weist die Antriebsvorrichtung einen symmetrischen Aufbau auf, wobei der Antriebsmotor mittig angeordnet ist. Die Getriebeeinheit, die Wellenkupplung, die Antriebswelle sowie die Antriebsorgane und letztendlich auch die endseitig vorgesehenen Lagereinheiten für die Antriebswellen sind rechts und links vom Antriebsmotor spiegelsymmetrisch zueinander angeordnet.

Der Antriebsmotor ist bevorzugt direkt oder indirekt an einem Querbauteil befestigt. Das Querbauteil seinerseits ist beidseitig an der Seitenabschlussvorrichtung befestigt. Das Querbauteil ist ein Längskörper und kann z. B. als Profilbauteil ausgebildet sein. Das Querbauteil verläuft vorzugsweise parallel zur Drehachse der Antriebsvorrichtung.

Gemäss einer besonderen Weiterbildung der ersten Ausführungsform ist der Antriebsmotor seitlich an der Seitenabschlussvorrichtung angeordnet. Der Antriebsmotor ist auf der von der Seitenabschlussvorrichtung abgewandten Seite mit einer ein- oder mehrteiligen Antriebswelle gekoppelt. Die Antriebswelle erstreckt sich über die Breite des Förderorgans zur gegenüberliegenden Seitenabschlussvorrichtung und ist drehbar an dieser angebracht. Grundsätzlich kann zu beiden Seiten ein Antriebsmotor seitlich an der Seitenrahmenvorrichtung angeordnet sein, welche gemeinsam eine dazwischen liegende ein- oder mehrteiligen Antriebswelle antreiben. Mehrteilig bedeutet, dass die Antriebswelle in Achsrichtung aus mehreren Teilwellen zusammengesetzt ist.

Der elektrische Antriebsmotor wird bevorzugt mit einer Spannung von 24 V angetrieben. Die Fördereinrichtung enthält daher bevorzugt einen Transformator zum Versorgen des Antriebsmotors mit elektrischer Energie. Dieser transformiert den elektrischen Strom von einer Netzspannung von z. B. 230 V oder 380 V auf 24 V.

Der Transformator ist bevorzugt ebenfalls innerhalb der Fördereinrichtung:
- zwischen den Seitenabschlussvorrichtungen und
- zwischen einer durch den oberen Trum ausgebildeten Förderebene und einer durch den unteren Trum ausgebildeten Rückführebene, sowie
- entlang der Förderrichtung betrachtet, zwischen den beiden Kopfenden des Förderorgans
angeordnet.

Der Transformator kann z. B. zwischen einer als Antriebsvorrichtung ausgebildeten ersten Umlenkvorrichtung am ersten Kopfende und einer weiteren Umlenk- oder Antriebsvorrichtung am zweiten Kopfende z. B. im Bereich der Abstützvorrichtung angeordnet sein. Der Transformator ist beispielsweise zwischen einzelnen Abstützeinheiten angeordnet. Der Antriebsmotor kann jedoch auch über eine 24 V Gleichstromspannung gespiesen werden.

Der Fördereinrichtung ist ferner bevorzugt auch eine Steuerungseinheit zur Steuerung des Antriebsmotors zugeordnet. Die Steuerungseinheit ist bevorzugt ebenfalls innerhalb der Fördereinrichtung:
- zwischen den Seitenabschlussvorrichtungen und
- zwischen einer durch den oberen Trum ausgebildeten Förderebene und einer durch den unteren Trum ausgebildeten Rückführebene, sowie
- entlang der Förderrichtung betrachtet, zwischen den beiden Kopfenden des Förderorgans
angeordnet.

Die Steuerungseinheit kann z. B. zwischen einer als Antriebsvorrichtung ausgebildeten ersten Umlenkvorrichtung am ersten Kopfende und einer weiteren Umlenk- bzw. Antriebsvorrichtung am zweiten Kopfende z. B. im Bereich der Abstützvorrichtung angeordnet sein. Die Steuerungseinheit kann insbesondere im Bereich der Abstützvorrichtung zwischen einzelnen Abstützeinheiten angeordnet sein. Es kann jedoch auch vorgesehen sein, dass die Steuerungseinheit zur Antriebssteuerung ausserhalb der Fördereinrichtung angeordnet ist.

Die Steuerungseinheit enthält bevorzugt einen Prozessor sowie vorteilhaft auch einen elektronischen Datenspeicher.

Die Steuerungseinheit kann ein Netzgerät zur separaten Speisung der Steuerungseinheit mit elektrischer Energie umfassen. Somit kann die Steuerungseinheit unabhängig vom Antriebsmotor mit elektrischer Energie gespiesen werden. Dies ist insbesondere in der Startphase wichtig, in welcher der Antriebsmotor einen sehr hohen Energiebedarf aufweist, so dass weitere Verbraucher, welche an denselben Stromkreis angeschlossen sind, nur ungenügend mit Leistung versorgt werden können. Das Netzgerät ist vorzugsweise ebenfalls innerhalb der Fördereinrichtung zwischen Seitenabschlussvorrichtungen und zwischen dem oberen und unteren Trum sowie, entlang der Förderrichtung betrachtet, zwischen den beiden Kopfenden des Förderorgans angeordnet. Das Netzgerät kann insbesondere im Bereich der Abstützvorrichtung zwischen einzelnen Abstützeinheiten angeordnet sein.

Ferner kann eine Kühlungsvorrichtung, wie Ventilator, zur Kühlung von Transformator, Netzteil und/oder Steuerungseinheit innerhalb der Fördereinrichtung zwischen den Seitenabschlussvorrichtungen und zwischen dem oberen und unteren Trum, sowie entlang der Förderrichtung betrachtet, zwischen den beiden Kopfenden des Förderorgans angeordnet sein. Die Kühlungsvorrichtung kann auch zur Ableitung der Wärme von den genannten Vorrichtungen in Aluminiumbauteile der Abstützvorrichtung ausgelegt sein.

Wie bereits erwähnt, wird das Förderorgan an Umlenkstellen an zwei, voneinander beabstandete Kopfenden von einem oberen zu einem unteren bzw. von einem unteren zu einem oberen Trum umgelenkt. Bildet die Fördereinrichtung eine lineare Förderstrecke aus, so sind die Kopfenden beispielsweise einander gegenüber liegend angeordnet. Der obere Trum bildet einen Förderabschnitt, welcher das Fördergut aufnimmt, und der untere Trum einen Rückführabschnitt des Förderorgans aus. An wenigstens einem der Kopfenden erfolgt die Umlenkung und der Antrieb durch die erfindungsgemässe Antriebsvorrichtung.

Am anderen Kopfende kann ebenfalls eine erfindungsgemässe Antriebsvorrichtung vorgesehen sein, so dass das Förderorgan an zwei Kopfenden gleichzeitig oder wahlweise angetrieben werden kann.

Eine Fördereinrichtung mit Antriebsvorrichtungen an beiden Kopfenden lässt sich in zwei Förderrichtungen, nämlich in eine Vorwärts- und Rückwärtsrichtung, betreiben, wobei jeweils jene Antriebsvorrichtung, welche das Förderorgan in der entsprechenden Förderrichtung auf Zug belastet, das Förderorgan antreibt. Eine in zwei Förderrichtungen betreibbare Fördereinrichtung ist zum Beispiel bei den weiter unten beschriebenen Lagerraumfördereinrichtungen, Laderaumfördereinrichtungen und Verladefördereinrichtungen erforderlich.

Förderorgane von Fördereinrichtungen in Form von Förderketten werden bevorzugt ausschliesslich auf Zug angetrieben, da solche Förderketten im Gegensatz zu Förderbändern, -riemen oder -gurten in der Regel nicht gespannt sind. In diesem Fall ist an beiden Kopfendbereichen eine Antriebsvorrichtung angeordnet, so dass sich auch die Förderkette in zwei einander entgegen gesetzte Richtungen schlupffrei antreiben lässt.

Sind in beiden Kopfendbereichen Antriebsvorrichtungen angeordnet, so lässt sich die eine Antriebsvorrichtung, welche insbesondere zum Antrieb des Förderorgans in die zur aktuellen Förderrichtung entgegen gesetzte Richtung vorgesehen ist, zum Abbremsen des in Förderrichtung bewegten Förderorgans einsetzen. Auf diese Weise lässt sich das Förderorgan in kurzer Zeit anhalten. Entsprechende Mittel sind hierzu vorgesehen.

Ferner lässt sich die oben genannten Antriebsvorrichtung, welche insbesondere zum Antrieb des Förderorgans in die zur aktuellen Förderrichtung entgegen gesetzte Richtung vorgesehen ist, zum Bremsen des in Förderrichtung bewegten Förderorgans einsetzen, um Schwingungen in der Fördereinrichtung, insbesondere im Förderorgan, zu beseitigen oder zu reduzieren. Entsprechende Mittel sind hierzu vorgesehen. Die Mittel können insbesondere einen Regelkreis vorsehen, mittels welchem aufkommenden Schwingungen durch gezieltes Bremsen entgegensteuert wird. Dadurch kann beispielsweise einem dynamischen Aufschwingen des Systems entgegengewirkt werden.

Es ist jedoch auch möglich, dass im anderen Kopfendbereich lediglich eine antriebslose Umlenkvorrichtung vorgesehen ist. Die Umlenkvorrichtung kann eine Achse mit daran angeordneten Umlenkorganen, z. B. in Form von Umlenkrollen oder Umlenkzahnrädern sein. Hierzu kann die Achse in eine oder beide Richtungen frei drehbar an der Seitenabschlussvorrichtung gelagert sein und/oder die Umlenkorgane sind in eine oder beide Richtungen frei drehbar an der Achse gelagert, welche drehfest befestigt sein kann. Bei der erst genannten Variante können die Umlenkorgane drehfest mit der Achse verbunden sein.

Es kann ferner vorgesehen sein, dass zwischen den beiden kopfendseitigen Umlenkvorrichtungen eine oder mehrere weitere Antriebsvorrichtung vorgesehen sind. Diese wenigstens eine weitere Antriebsvorrichtung enthält einen elektrischen Antriebsmotor und eine mit dem Antriebsmotor gekoppelte Antriebswelle. Die Antriebswelle trägt wenigstens ein Antriebsorgan, z. B. in Form einer Antriebsrolle oder eines Antriebszahnrades, zum Antreiben des Förderorgans. Das Förderorgan steht mit dem Antriebsorgan wenigstens in einem tangentialen Antriebskontakt. Die Antriebswelle ist bevorzugt ebenfalls an den Seitenabschlussvorrichtungen bzw. an Bauteilen, welche an den Seitenabschlussvorrichtungen angebracht sind, gelagert.

Die Antriebsvorrichtung dieses Zwischenantriebes kann gemäss einer der voran beschriebenen Ausführungsformen für Antriebsvorrichtungen ausgestaltet sein.

Die Abstützvorrichtung ist gemäss einer ersten bevorzugten Konstruktionslösung zwischen den beiden Seitenabschlussvorrichtungen sowie zwischen den beiden Kopfendbereichen angeordnet. D.h. die Stützrollen sind lediglich zwischen den Umlenkachsen bzw. Antriebsachsen der Kopfendbereiche angeordnet. Sie sind also nicht um die Umlenkachse bzw. Antriebsachse in den Kopfendbereichen geführt.

Die Rollenkörper bzw. Stützrollen werden bevorzugt nicht direkt über einen Antrieb angetrieben. Sie werden vielmehr bevorzugt indirekt über das Förderorgan angetrieben, d.h. in eine abrollende Bewegung versetzt.

Der Antrieb der Rollenkörper bzw. Stützrollen geschieht insbesondere dadurch, indem das Fördergut mit seiner Gewichtskraft über das Förderorgan auf den Stützrollen lastet, d.h. das Förderorgan gegen die Stützrollen drückt.

Die Abstützvorrichtung bzw. die wenigstens eine Abstützeinheit kann eine Mehrzahl von drehbaren Rollen aufweisen, auf welchen das Förderorgan rollend abgestützt ist. Die Rollen sind bevorzugt über die Flächenausdehnung des Förderorgans verteilt an der Abstützvorrichtung angeordnet. Da die Abstützvorrichtung zwischen den beiden Seitenabschlussvorrichtungen angeordnet sind, sind die Rollen nicht an den Seitenabschlussvorrichtungen sondern zwischen diesen angeordnet und befestigt.

Die Rollen sind gemäss einer ersten Variante jeweils über eine physische Drehachse axial gelagert, wobei die Drehachse ortsfest angeordnet ist. Gemäss dieser Variante sind die Rollen bevorzugt in der ortsfesten Abstützvorrichtung angeordnet, wobei die Gewichtslast über die Drehachsen von den Rollen auf die Abstützvorrichtung übertragen wird.

Die Rollen können gemäss einer zweiten Variante jeweils über eine physische Drehachse axial gelagert sein, wobei die Drehachsen in Förderrichtung bewegbar angeordnet sind. Gemäss dieser Variante sind die Rollen bevorzugt am Förderorgan angeordnet, wobei die Gewichtslast über die Drehachse vom Förderorgan auf die Rollen und über diese auf die Abstützvorrichtung übertragen wird.

Die Rollen können gemäss einer dritten Variante über einen Stützkörper abrollend in einer ortsfesten Abstützvorrichtung angeordnet sein, wobei die Gewichtslast über die Mantelfläche der Rollen vom Förderorgan auf die Abstützvorrichtung übertragen wird. Die Rollen sind unter anderem entlang einer Strecke parallel zur Förderrichtung bewegbar.

Die Abstützvorrichtung enthält in einer Weiterbildung der Erfindung bevorzugt eine Mehrzahl von in der Fläche des Förderorgans angeordneten Abstützeinheiten, auf welchen das Förderorgan im Bereich des oberen Trums abrollend abgestützt ist. Die Abstützeinheiten können achsgelagerte oder parallel zur Förderrichtung rollend bewegbare Rollen bzw. jeweils einen Rollenkörper mit einer Mehrzahl von Rollen umfassen oder daraus bestehen. Die Rollen bzw. der Rollenkörper sind an der Abstützvorrichtung selbst oder an der Abstützeinheit bzw. einem Stützkörper der Abstützeinheit drehbar gelagert.

Gemäss einer bevorzugten Ausführungsform der erfindungsgemässen Fördereinrichtung umfassen die Abstützeinheiten jeweils einen Stützkörper sowie einen Rollenkörper mit einer Vielzahl von Rollen, welche in einem geschlossenen Kreislauf um den Stützkörper umlaufend angeordnet sind. Die Rollen laufen mit ihrer Mantelfläche entlang einer geschlossenen Bewegungsbahn am Stützkörper ab. Die Rollen können über entsprechende Verbindungsmittel miteinander zu einem Rollenkörper verbunden sein. Die Verbindungsmittel können flexible Flächenelemente, z. B. aus textilen Flächengebilden, sein. Die Rollen sind nicht auf Drehachsen gelagert. Die auf die Rollen wirkende Auflagekraft des Förderorgans wird dementsprechend nicht auf Drehachsen sondern über die Mantelfläche der Rollen auf den Stützkörper übertragen.

Es kann auch vorgesehen sein, dass die Abstützvorrichtung einen gemeinsamen Grundkörper enthält, welcher die Stützkörper für eine Mehrzahl umlaufender, unabhängiger Rollenkörper ausbildet.

Zwischen dem Förderorgan und dem Rollenkörper der Abstützeinheit kann ferner ein mitlaufendes Band angeordnet sein, welches die Rollen bedeckt, so dass das Förderorgan über das Band indirekt an den Rollen abrollt. Das Förderorgan rollt also auf dem Band liegend an den Rollen ab. Das Band kann z. B. gemeinsam mit den Rollen um einen Stützkörper geführt sein. Ein solches Band ist besonders zweckmässig in Kombination mit einer Mattenkette: im Gegensatz zu einem Förderband weist eine Mattenkette Öffnungen auf, welche ihre Beweglichkeit ermöglichen, aber auch ein Herabfallen von Schmutz in den Rollenkörper zulassen. Diesem Problem wird durch das erwähnte Band entgegen gewirkt.

Eine Fördereinrichtung mit den beschriebenen Abstützeinheiten ist beispielsweise in der WO 2010/148523 A1 offenbart.

In einer Weiterbildung dieser Ausführungsform können, in Förderrichtung betrachtet, mehrere hintereinander angeordnete Abstützeinheiten mit jeweils einem Stützkörper und einem Rollenkörper eine Rollenbahn ausbilden.

Die Rollenbahn kann jedoch auch von einer einzelnen Abstützeinheit mit einem Stützkörper und einem Rollenkörper der oben beschriebenen Art gebildet werden.

So kann die Abstützvorrichtung mehrere parallel nebeneinander angeordnete Rollenbahnen mit jeweils einer Mehrzahl hintereinander angeordneter Rollen bzw. Rollenkörper enthalten. Die einzelnen Rollenbahnen können zum Beispiel einen Abstand von einer Rollenbreite zueinander oder einem Vielfachen davon aufweisen.

Mehrere parallel nebeneinander angeordnete Rollenbahnen können ein Abstütz-Modul ausbilden, wobei die Fördereinrichtung durch Anordnung von mehreren solcher Abstütz-Module in Förderrichtung hintereinander in variablen Längen ausgebildet werden kann. Ein solches Abstütz-Modul kann in Förderrichtung eine Länge von 0.5 m bis mehreren Metern aufweisen.

Die Abstützeinheiten und mit Ihnen die dazugehörigen Rollenkörper können auch in einem ziegelsteinartigen Muster mit seitlicher Versetzung zueinander in der Abstützvorrichtung angeordnet sein.

Die Abstützeinheiten können durch Längsträgerelemente gehalten sein, welche parallel zur Förderrichtung liegen. Die Längsträgerelemente können auf einer unterhalb angeordneten Tragvorrichtung abgestützt sein. Die Tragvorrichtung kann z. B. ein Gitterrost sein, welcher von der Seitenabschlussvorrichtung getragen wird. Ferner sind die Längsträgerelemente bevorzugt über Querbauteile ausgerichtet. Diese sind z. B. im Kopfendbereich angeordnet. Die Längsträgerelemente können auch über die Querbauteile (zusätzlich) abgestützt sein. Die Querbauteile wiederum sind bevorzugt an der Seitenabschlussvorrichtung befestigt. Im Bereich der Antriebsvorrichtung ist am genannten Querbauteil, wie bereits erwähnt, vorzugsweise auch der Antriebsmotor gehaltert.

Die Längsträgerelemente können als U-Profile ausgebildet sein, welche zum oberen Trum hin offen sind. Die Abstützeinheiten sind im U-Profil platziert und in diesem ortsfest gesichert. Die Abstützeinheiten stellen bevorzugt eine flächige Abstützung des Förderorgans quer und längs zur Förderrichtung sicher.

Gemäss einer alternativen Ausführungsvariante der Erfindung ist die wenigstens eine Abstützeinheit so ausgebildet, dass die entlang einer Umlaufbahn um den Stützkörper umlaufenden Stützrollen in einem oberen Umlaufbahnabschnitt, in welchem die Stützrollen in Förderrichtung abrollen, eine Förderauflage für den oberen Trum des Förderorgans und in einem unteren Umlaufbahnabschnitt, in welchem die Stützrollen in einer der Förderrichtung entgegen gesetzten Richtung abrollen, eine Führungsauflage für den unteren Trum des Förderorgans ausbilden. Der obere und untere Umlaufbahnabschnitt liegen einander gegenüber. Zwischen den beiden Umlaufbahnabschnitten ist bevorzugt eine Stützstruktur angeordnet.

Die Stützrollen können in ihrem oberen und unteren Umlaufbahnabschnitt in C- bzw. U-förmigen Profilen geführt sein.

Gemäss einer Weiterbildung der Abstützvorrichtung enthält diese einen flächig ausgedehnten Stützkörper, welcher als Stützkörper für eine Mehrzahl von unmittelbar oder in einem Abstand nebeneinander und parallel zueinander angeordneten umlaufenden Rollenkörpern dient. Die Rollenkörper können zumindest abschnittsweise, insbesondere an einem oberen und unteren Bahnabschnitt in C- bzw. U-förmigen Profilen geführt sein. Der Stützkörper umfasst bevorzugt eine zwischen einem oberen und unteren Bahnabschnitt angeordnete Stützstruktur.

Gemäss einer zweiten Konstruktionslösung einer Abstützvorrichtung sind am Förderorgan an seiner der Abstützvorrichtung zugewandten Flächenseite, bezüglich des Förderorgans, eine Mehrzahl von ortsfest und axial drehbar gelagerten Rollen angebracht. Die Rollen werden entsprechend gemeinsam mit dem Förderorgan in Förderrichtung bewegt. Sie kooperieren dabei mit der Abstützvorrichtung, indem diese auf der Abstützvorrichtung abrollen. Die Abstützvorrichtung kann hierzu eine ortsfeste Abrollbahn ausbilden.

Die Last wird hier im Gegensatz zu Rollenkörpern, die rollend um Stützkörper geführt sind, von den Rollenachsen getragen. Das Förderorgan bildet jedoch nichtsdestotrotz zur Förderfläche hin eine glatte Förderebene auf. Das heisst, die Rollen sind unterhalb der Förderebene angeordnet und stehen nicht über die Förderebene hinaus. Hierzu bildet das Förderorgan über den Rollen eine geschlossene Abdeckung aus.

Das Förderorgan enthält bevorzugt über die gesamte Längsausdehnung eine Mehrzahl von Rollen, welche voneinander beabstandet angeordnet sind. Die einzelnen Rollen können sich über die gesamte Breite des Förderorgans erstrecken. Es können jedoch über die Breite des Förderorgans auch eine Mehrzahl von versetzt oder auf gleicher Höhe nebeneinander angeordneter Rollen vorgesehen sein.

Die Rollen können in Förderrichtung betrachtet zum Beispiel in Form parallel nebeneinander angeordneter Rollenbahnen mit jeweils einer Mehrzahl hintereinander angeordneter Rollen angeordnet sein. Die Rollenbahnen können zum Beispiel einen Abstand von einer Rollenbreite zueinander oder einem Vielfachen davon aufweisen.

Die Rollen sorgen so für eine gleichmässige rollende Abstützung auf der Abstützvorrichtung. Die Abstützvorrichtung bildet hierzu für die Rollen bevorzugt eine ebene Abrollfläche aus. Die Abstützvorrichtung kann ferner für eine oder mehrere parallele Reihen bzw. Bahnen von in Förderrichtung hintereinander angeordneten Rollen auch so genannte Laufschienen ausbilden.

Gemäss dieser Ausführungsform ist das Förderorgan, wie nachfolgend beschrieben, bevorzugt eine Gliederkette oder eine Mattenkette.

Das Förderorgan und die Antriebsvorrichtung bzw. deren Antriebsorgane können so ausgestaltet sein, dass die Rollen am Förderorgan in korrespondierende Vertiefungen des Antriebsorgans greifen und so mitunter für die erforderliche Formschlussverbindung zur Übertragung eines Antriebsmomentes vom Antriebsorgan auf das Förderorgan sorgen.

Das flächig ausgedehnte Förderorgan kann ein- oder mehrteilig sein. Das Förderorgan zeichnet sich dadurch aus, dass dieses eine Auflagefläche für das Fördergut ausbildet. Das Förderorgan steht somit in direktem Kontakt mit dem Fördergut, welches auf diesem gefördert wird.

Das Förderorgan kann ein Förderband, ein Fördergurt oder ein Förderriemen sein. Das Förderorgan ist jedoch bevorzugt eine gegliederte Förderkette mit einer geschlossenen Förderfläche aus jeweils einzelnen, miteinander gelenkig verbundenen Kettengliedern. Eine solche Förderkette kann z. B. eine flächig ausgedehnte Gliederkette, ein Modulband, eine Plattenkette, eine Modulbandkette oder eine Mattenkette sein. Die Förderkette kann auch eine Scharnierbandkette oder eine Plattenbandkette sein. Die Kettenglieder der Förderkette können z. B. aus Kunststoff bestehen. Eine solche Förderkette in Ausführung einer Mattenkette ist beispielsweise in der Schweizer Patentanmeldung Nr. 2011 0649/11 beschrieben.

Die Verwendung von Förderketten hat den Vorteil, dass ihre Förderfläche aufgrund der vergleichsweise massiven Ausbildung der Kettenglieder weit stärker belastbar ist als die Förderfläche von Förderbändern, -riemen oder -gurten. Dadurch lassen sich auch schwere Güter, wie Automobile oder LKW-Ladungen mit der erfindungsgemässen Fördereinrichtung fördern, transportieren oder einlagern.

Die Fördereinrichtung kann ein einzelnes Förderorgan enthalten, welches sich in diesem Fall bevorzugt über die gesamte Breite zwischen den Seitenabschlussvorrichtungen erstreckt. Die Fördereinrichtung kann jedoch auch zwei, drei oder allgemein eine Mehrzahl von parallel nebeneinander angeordneten Förderorganen enthalten. Die Förderorgane können voneinander beabstandet oder unmittelbar nebeneinander angeordnet sein.

Die Mehrzahl von Förderorganen werden jedoch bevorzugt über dieselbe Antriebsvorrichtung(en) gemeinsam angetrieben.

Das Förderorgan kann im Bereich des unteren Trums, in welchem keine Belastung durch Fördergut vorliegt, über Gleitelemente gleitend geführt und gestützt sein. Es ist jedoch möglich, dass das Förderorgan auch im Bereich des unteren Trums über Rollen, insbesondere über Abstützeinheiten mit Rollenkörpern der oben beschriebenen Art, abrollend gestützt und geführt ist.

Gemäss einer Weiterbildung der Erfindung weist die Fördereinrichtung ein der Antriebsvorrichtung zugeordnetes Umlenkorgan auf, welches das Förderorgan im Bereich des unteren Trums zum Antriebsorgan hin umlenkt, so dass der Umschlingungswinkel des Förderorgans um das wenigstens eine Antriebsorgan mehr als 180° beträgt.

Die Fördereinrichtung kann der Förderung von Schüttgut oder Stückgut, wie ruhendes Gut oder sich selbst bewegbares Gut eingesetzt werden. Stückgüter können Waren oder Lebewesen, z. B. Personen, Tiere oder Pflanzen sein. Die durch das flächig ausgedehnte Förderorgan ausgebildete Förderfläche kann eben oder geneigt verlaufen. Das Förderorgan kann linear oder kurvenförmig verlaufen, wobei die Kurvenform bei einer geneigten Förderfläche helixartig bzw. wendelförmig aufwärts oder abwärts geführt sein kann. Die Fördereinrichtung kann z. B. als Fahrsteig oder Rollsteig ausgebildet sein. Fahr- bzw. Rollsteige finden z. B. Einsatz in Flughäfen, Einkaufszentren oder Bahnhöfen zur Beförderung von Personen über eine längere Strecke.

Dank der rollenden Abstützung und Führung des Förderorgans im Bereich des oberen Trums wird die Reibung erheblich reduziert, wodurch zum Antrieb des Förderorgans leistungsschwächere und kleinere Antriebsmotoren eingesetzt werden können, welche denselben Anforderungen an den Betrieb der Fördereinrichtung gerecht werden wie bisherige, leistungsstärkere und grössere Motoren. Die Motoren können also entsprechend kleiner und kompakter ausgelegt werden. Durch die Integration des Antriebsmotors in die Antriebsachse der Umlenkeinrichtung kann auch auf platzraubende Getriebeanordnungen verzichtet werden. Ferner erlauben die geringeren Leistungsanforderungen auch den Einsatz von Trommelmotoren, wie weiter oben beschrieben, welche jedoch nicht Gegenstand vorliegender Patentansprüche sind.

Durch die integrierte Bauweise, bei welcher die Antriebsvorrichtung sowie die Abstützvorrichtung innerhalb des umlaufenden Förderorgans und innerhalb der Seitenabschlussvorrichtung angeordnet ist, kann die Fördereinrichtung sehr kompakt gebaut werden. Die Fördereinrichtung weist insbesondere keine ausserhalb der Seitenabschlussvorrichtung und des Förderorgans liegenden, durch Vorrichtungskomponente erzeugten Störkonturen auf.

Somit kann auch die Bauhöhe sowie das Eigengewicht gering gehalten werden, was wiederum eine Verwendung der Fördereinrichtung bei beengenden Platzverhältnissen ermöglicht. So kann die Bauhöhe ab Boden bis zur Förderfläche z. B. lediglich 120 mm betragen.

Aus oben genannten Gründen findet die erfindungsgemässe Fördereinrichtung insbesondere auch Verwendung als Werker-Mitfahrband. Mitfahrbänder werden in der industriellen Fertigung eingesetzt, in welcher Arbeitsschritte, wie Montagearbeiten, an sich vorbei bewegenden Objekten einer Fertigungsstrasse vorgenommen werden müssen. Um dem einzelnen Mitarbeiter genügend Zeit zur Durchführung seiner Arbeitsschritte am sich vorbei bewegenden Objekt zu verschaffen, wird der Mitarbeiter auf einem Werker-Mitfahrband parallel zum Objekt in Förderrichtung mitbewegt. Der Mitarbeiter kann z. B. geschwindigkeitssynchron mit dem Objekt mitbewegt werden.

Ein solches Werker-Mitfahrband kann eine Länge von einigen Metern, z. B. von 20-50 m aufweisen. Ein einzelnes Werker-Mitfahrband kann eine Baugruppe ausbilden, wobei durch Aneinanderreihung und gegebenenfalls gemeinsamer Steuerung mehrerer solcher Baugruppen weitaus grössere Förderstrecken erzielt werden können.

Die erfindungsgemässe Fördereinrichtung kann auch Verwendung finden als Laderaumfordereinrichtung. Die Laderaumfördereinrichtung kann z. B. in einem Strassenfahrzeug, wie LKW, in einen Schienenfahrzeug, wie Güterwagen, in einem Wasserfahrzeug, wie Frachtschiff, oder in einem Luftfahrzeug, wie Flugzeug, Verwendung finden.

Ferner kann die Laderaumfördereinrichtung auch in einem Fracht- oder Schiffscontainer zum Be- und Entladen des Containers Verwendung finden. Solche Container dienen dem Gütertransport auf der Strasse, der Schiene, in der Luft oder auf dem Wasser und werden entsprechend von Strassenfahrzeugen, Schienenfahrzeugen, Luftfahrzeugen oder Wasserfahrzeugen befördert.

Im Weiteren kann die erfindungsgemässe Fördereinrichtung auch Verwendung finden als Lagerraumfördereinrichtung in einem Lagersystem, insbesondere in einem Hochregallager. Das Lagersystem zeichnet sich insbesondere durch eine Mehrzahl von Palettenstellplätzen aus. Das Lagersystem kann eine Mehrzahl von übereinander angeordneten Lagerebenen aufweisen. Jede Lagerebene weist wiederum eine Mehrzahl von in Einstellrichtung betrachtet nebeneinander und/oder hintereinander angeordneter Palettenstellplätze auf.

Jeder Palettenstellplatz oder mehrere Palettenstellplätze gemeinsam enthalten jeweils eine erfindungsgemässe Lagerraumfördereinrichtung. Das Lagergut wird auf Transportpaletten mittels Transportgeräte wie Hubstapler oder Hubwagen zu den Palettenstellplätzen geführt, d.h. zur Abgabe- und Entnahmestelle im Lagersystem transportiert, dort auf die Lagerraumfördereinrichtung abgesetzt und über diese in Einstellrichtung auf den vorgesehenen Palettenstellplatz gefördert.

Der Abruf des eingelagerten Gutes geschieht in umgekehrter Weise. Das palettierte Lagergut wird von seinem Palettenstellplatz auf der Lagerraumfördereinrichtung in Richtung der Entnahmestelle gefördert und dort von einem Transportgerät in Empfang genommen und wegtransportiert.

Die Abgabestelle kann der Entnahmestelle entsprechen, so dass das Lagergut an derselben Stelle ins Lagersystem eingespiesen und von diesem in entgegen gesetzter Förderrichtung entnommen wird. Solche Lagersysteme arbeiten in der Regel nach dem "First in, Last out" Prinzip.

Die Abgabestelle und Entnahmestelle können jedoch auch ortsgetrennt sein, und z. B. einander gegenüber liegen. In diesem Fall wird das Lagergut an der Abgabestelle abgegeben und an der Entnahmestelle entnommen. Solche Lagersystem arbeiten in der Regel nach dem "First in, First out" Prinzip.

Das beschriebene Lagersystem dient dem Lagern, das heisst Speichern von Lagergut, oder dem Puffern von Gütern zwischen zwei Verarbeitungs- oder Transport- bzw. Förderschritten.

Eine weitere Verwendung der erfindungsgemässen Fördereinrichtung liegt im Bereich der Kurven-Förderer, bei welchen das Transportgut um einen Winkel, von z. B. 90° (Winkelgrade) gefordert wird. Die Kurvenbahn des Förderorgans kann auch um einen Winkel von weniger oder mehr als 90° geführt sein. Weist die Förderfläche eine Steigung auf, so kann die Kurvenbahn sogar helixartig um einen Winkel von mehr als 360° geführt sein. Die Kurvenförderer, welche als solche aus dem Stand der Technik bekannt sind können, können mit einem Förderband oder Mattenkette betrieben werden. Die beiden Kopfenden, an welchen das Förderorgan vom oberen in den unteren Trum oder umgekehrt umgelenkt wird, und an welchem die Antriebsvorrichtung angeordnet sind stehen zueinander in jenem Winkel, in welchem das Transportgut um eine Kurve geführt werden soll. Die Antriebsvorrichtung weist einen erfindungsgemässen Aufbau auf.

Da das Förderorgan am Aussenbogen den grösseren Weg zurücklegen muss als am Innenbogen, läuft das Förderorgan am Aussenbogen mit grösserer Geschwindigkeit als am Innenbogen. Entsprechend müssen Antriebsorgane am Aussenbogen eine höhere Drehzahl aufweisen als Antriebsorgane am Innenbogen. Bei Antriebsrollen, welche das Antriebsorgan mittels Reibschluss antreiben, lässt sich der Unterschied bis zu einem gewissen Grad über den Schlupf regeln. Es kann auch vorgesehen sein, dass nur einzelne der Antriebsorgane entlang der Antriebswelle angetrieben werden und andere Antriebsorgane als frei drehende Umlenkorgane, wie Rollen oder Zahnräder, ausgebildet sind.

Sind die Antriebsorgane z. B. als Zahnräder ausgebildet, so können Geschwindigkeitsunterschiede zwischen dem Förderorgan und dem Antriebsorgan nicht mehr über den Schlupf ausgeglichen werden. Die Winkelgeschwindigkeit der Antriebsorgane muss ausgehend von einer einheitlichen Winkelgeschwindigkeit der Antriebswelle in radialer Richtung zur Kurvenbahn den unterschiedlichen Bahngeschwindigkeiten des Förderorgans angepasst werden. Dies kann z. B. in bekannter Art und Weise geschehen, indem der Wälzkreisdurchmesser der Antriebszahnräder radial vom Innenbogen zum Aussenbogen des Kurvenförderers hin zunimmt. In der Gesamtbetrachtung weist die Zahnradanordnung radial vom Innenbogen zum Aussenbogen eine kegelförmige Anordnung auf. Diese Ausführungsvariante weist jedoch den Nachteil auf, dass der obere Trum und der untere Trum quer zur Bewegungsrichtung des Förderorgans nicht den gleichen Abstand zueinander aufweisen.

Gemäss einer alternativen Lösung sind die entlang der Drehachse der Antriebsvorrichtung angeordneten Antriebsorgane, insbesondere Antriebszahnräder, mit gleichen Wälzkreisdurchmessern ausgebildet. Jedem Antriebsorgan ist jedoch ein eigenes Übersetzungsgetriebe, z. B. ein Planetengetriebe, zugeordnet, welches dem Zahnrad eine individuelle Drehzahl zuordnet.

Die entlang der Drehachse der Antriebsvorrichtung angeordneten Antriebsorgane drehen sich also mit unterschiedlichen Winkelgeschwindigkeiten, welche radial vom Innenbogen zum Aussenbogen des Kurvenförderers hin zunimmt.

Zur Erreichung desselben Resultates könnte grundsätzlich auch ein Differentialgetriebe vorgesehen sein, welche den einzelnen Antriebsorganen entlang der Antriebswelle verschiedene Drehzahlen überträgt. Dieses ist aber vergleichsweise teuer und daher wirtschaftlich weniger interessant.

Die Antriebsvorrichtungen können ferner auch eine Brems- und/oder Blockiereinrichtung enthalten. Die Bremseinrichtung erlaubt ein schnelles Abbremsen des Förderorgans, z. B. bei einem Notstopp. Die Blockiereinrichtung erlaubt die Blockierung des ein- oder beidseitigen Freilaufs der stehenden Antriebswelle. Auf diese Weise wird verhindert, dass das stillstehende Förderorgan und das darauf angeordnete Fördergut bei ruhendem Antrieb unter Einwirkung einer äusseren Kraft in Bewegung versetzt werden kann.

Die Erfindung betrifft ferner einen weiteren Aspekt einer Fördereinrichtung, nämlich die Abstützvorrichtung. Gemäss einer weiteren Aufgabe der Erfindung soll, unabhängig von der Antriebsvorrichtung, eine Abstützvorrichtung vorgeschlagen werden, welche sich durch eine zuverlässige, grossflächige Abstützung des Förderorgans sowie durch einen einfachen Aufbau auszeichnet. Die Abstützvorrichtung soll insbesondere mittels wenigen Fertigungsschritten kostengünstig herstellbar, leicht und trotzdem robust und biegesteif sein. Überdies soll die Abstützvorrichtung kompakt aufgebaut sein und insbesondere eine geringe Bauhöhe aufweisen. Die nachfolgend beschriebene Abstützvorrichtung bzw. Fördereinrichtung mit Abstützvorrichtung kann als unabhängige Erfindung betrachtet werden, welche jedoch durchaus mit der oben beschriebenen Erfindung kombinierbar ist, wobei die erfindungsgemässe Abstützvorrichtung als alternative Ausführungsform zu den oben beschriebenen Abstützvorrichtungen betrachtet werden kann.

Die Fördereinrichtung umfasst gemäss dieser Erfindung ebenfalls:
- wenigstens ein umlaufendes, flächig ausgedehntes Förderorgan mit einem oberen Trum und einem unteren Trum, welches in zwei, voneinander beabstandeten Kopfendbereichen umgelenkt wird,
- eine zwischen den beiden Kopfendbereichen angeordnete Abstützvorrichtung zur Abstützung des oberen Trums, insbesondere zur rollenden Abstützung, und
- eine Antriebsvorrichtung, welche bevorzugt in einem der Kopfendbereiche angeordnet ist.

Diese weitere Erfindung zeichnet sich nun dadurch aus, dass die Abstützvorrichtung einen flächig ausgedehnten Stützkörper enthält, welcher zwei Flächenelemente umfasst, die durch Verbindungsprofile, welche zwischen den Flächenelementen angeordnet sind, zusammengehalten und voneinander beabstandet werden. Die beiden Flächenelemente bilden jeweils eine aussen liegende, freie Flächenseite aus. Ein erstes Flächenelement ist mit seiner oberen, freien Flächenseite dem Förderorgan, bzw. dessen oberen Trum, zugewandt. Ein zweites Flächenelement ist mit seiner unterer, freien Flächenseite dem unteren Trum des Förderorgans bzw. der Bodenunterlage zugewandt.

Auf der freien, oberen Flächenseite des ersten Flächenelements sind Aufnahmekörper angebracht, welche Stützrollen zur Abstützung des oberen Trums aufnehmen.

Der Stützkörper umfasst insbesondere eine Mehrzahl von zwischen den Flächenelementen angeordneten und vorzugsweise parallel zueinander ausgerichteten Verbindungsprofilen. Die vorliegende Erfindung erfüllt dabei die eingangs genannten Anforderungen, wobei sogar eine Bauhöhe von lediglich 80 mm erreicht wird.

Die Flächenelemente sind bevorzugt Platten oder Bleche aus Kunststoff oder Metall, insbesondere Aluminium. Die Flächenelemente können auch Verbundplatten aus mehreren Materialien wie Kunststoff und Metall sein. Die Flächenelemente können geschlossenflächig ausgebildet sein oder sie können Durchbrüche aufweisen. So können zum Beispiel auch Lochbleche oder Gitterrostelemente verwendet werden.

Die Verbindungsprofile sind Längsbauelemente aus z. B. Kunststoff oder vorzugsweise aus Metall, wie Aluminium. Die Metallprofile sind bevorzugt Strangpressprofile. Die Verbindungsprofile können z. B. als C- bzw. U- oder Doppel-T-Profile ausgebildet sein. Die Verbindungsprofile sind mit den Flächenelementen vorzugsweise flächig verklebt. Hierzu sind insbesondere Profilwände mit den Flächenelementen verklebt. Die Verbindungsprofile können jedoch auch mit den Flächenelementen verschweisst sein.

Die Klebverbindung kann mittels eines fliessfähigen (hochviskosen bis pastösen), härtenden bzw. trocknenden Klebers, einem Klebeband oder einer Klebefolie hergestellt werden.

Die Aufnahmekörper sind bevorzugt ebenfalls flächig mit dem ersten Flächenelement verklebt oder verschweisst. Die Aufnahmekörper sind bevorzugt als Längsbauteile, insbesondere als Längsprofile aus Kunststoff oder Metall, wie Aluminium ausgebildet. Die Aufnahmekörper können z. B. als C- bzw. U-Profile ausgebildet sein. Sie formen einen, vom Flächenelement weg weisenden Aufnahmeraum für in Förderrichtung hintereinander angeordnete Rollen. Die Rollen sind in diesem Aufnahmeraum ortsfest oder parallel zur Förderrichtung bewegbar rollend geführt.

Gemäss einer Weiterbildung der Erfindung weist der Stützkörper auch auf der unteren, freien Flächenseite des zweiten Flächenelements Aufnahmekörper auf.

Die Aufnahmekörper bilden auch hier einen, vom Flächenelement weg weisenden Aufnahmeraum für in Förderrichtung hintereinander angeordnete Rollen auf. Die Rollen sind in diesem Aufnahmeraum ortsfest oder parallel zur Förderrichtung bewegbar rollend geführt.

Gemäss dieser Weiterbildung der Erfindung bilden die Rollen nicht nur eine Abstützung für den oberen Trum des Förderorgans sondern auch eine Abrollführung für den unteren Trum des Förderorgans aus.

Gemäss einer anderen Weiterbildung der Erfindung weist der Stützkörper zwischen den beiden Flächenelementen angeordnete Aufnahmekörper auf, welche einen Aufnahmeraum für in Förderrichtung hintereinander angeordnete Rollen ausbilden. Die Rollen sind in diesem Aufnahmeraum parallel zur Förderrichtung bewegbar rollend geführt.

Der Aufnahmekörper gemäss den genannten Weiterbildungen der Erfindung kann wie oben beschrieben ausgeführt und am Flächenelement angebracht sein.

In einer bevorzugten Weiterbildung der Erfindung bildet jeweils ein zum oberen Trum hin gerichteter und ein darunter liegender, insbesondere zum unteren Trum hin gerichteter, Aufnahmekörper zusammen mit endseitig angeordneten Verbindungskörpern eine um den Stützkörper umlaufende Umlaufbahn für die Stützrollen aus. Die Umlaufbahn ist nicht kreisförmig. Sie bildet vielmehr im Stützbereich bevorzugt einen linearen Bahnabschnitt auf. Die Stützrollen werden also in den Aufnahmekörpern entlang einer Umlaufbahn, welche unter anderem auch parallel zur Förderrichtung verläuft, um den Stützkörper umlaufend geführt.

Die Rollen sind nicht ortsfest gelagert. Die Traglast wird auch hier ausschliesslich über die Mantelfläche der Rollen auf den Stützkörper übertragen. Die Stützrollen können durch ein Verbindungselement miteinander zu einem Rollenkörper verbunden sein, wobei das, z. B. flächenförmige, Verbindungselement lediglich als Führungselement dient und keine Stützkräfte aufnimmt bzw. weitergibt.

Die Fördereinrichtung enthält auch hier parallel zur Förderrichtung verlaufende Seitenabschlussvorrichtungen, welche insbesondere durch Seitenlängsprofile ausgebildet werden. Die beiden Seitenabschlussvorrichtungen können auch hier durch Kopfendabschlussvorrichtungen, z. B. Querprofile, zu einem Tragrahmen verbunden sein. Die Abstützvorrichtung ist nun bevorzugt seitlich an den beiden Seitenabschlussvorrichtungen befestigt. Hierzu kann der Stützkörper zwischen den beiden Flächenelementen seitlich angeordnete Verbindungsprofile aufweisen, über welche die Befestigung an die Seitenabschlussvorrichtungen erfolgt. Die Abstützvorrichtung ist insbesondere innerhalb der Tragrahmenkonstruktion angeordnet und an dieser befestigt. Auf diese Weise wird die innerhalb der Seitenabschlussvorrichtungen auf das Förderorgan aufgebrachte Traglast nach aussen auf die Seitenabschlussvorrichtungen bzw. den Tragrahmen übertragen.

Die Fördereinrichtung kann hierbei eine einzige durchgängige Abstützvorrichtung enthalten. Es ist auch möglich, dass die Fördereinrichtung mehrere, in Förderrichtung nebeneinander und/oder hintereinander angeordnete Abstützvorrichtungen gleicher oder sich ergänzender Bauart enthält. Die Abstützvorrichtungen der beschriebenen Art sind bevorzugt als Montageeinheit ausgebildet.

### KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1:: eine perspektivische Darstellung einer ersten Ausführungsform einer Antriebsvorrichtung;
- Figur 2:: eine Explosionsdarstellung der Antriebsvorrichtung gemäss Figur 1;
- Figur 3:: eine perspektivische Darstellung einer Umlenkvorrichtung;
- Figur 4:: eine perspektivische Ansicht der Abstützvorrichtung einer erfindungsgemässen Fördereinrichtung von oben;
- Figur 5:: eine weitere perspektivische Ansicht einer Abstützvorrichtung einer erfindungsgemässen Fördereinrichtung von oben;
- Figur 6:: einen vergrösserten Ausschnitt aus dem Bereich der Antriebsvorrichtung gemäss Figur 6.
- Figur 7:: eine weitere perspektivische Ansicht einer Abstützvorrichtung einer erfindungsgemässen Fördereinrichtung von oben;
- Figur 8:: eine perspektivische Ansicht einer Unterstützungseinrichtung einer erfindungsgemässen Fördereinrichtung von unten;
- Figur 9:: eine Seitenansicht einer spezifischen Ausführungsform aus dem Bereich der Antriebsvorrichtung;
- Figur 10:: eine Seitenansicht einer weiteren spezifischen Ausführungsform aus dem Bereich der Antriebsvorrichtung;
- Figur 11:: eine perspektivische Ansicht einer spezifischen Ausführungsform der erfindungsgemässen Fördereinrichtung;
- Figur 12:: eine Seitenansicht einer Seitenabschlussvorrichtung einer Fördereinrichtung gemäss Figur 11 im Detail;
- Figur 13-14:: Seitenansichten einer ersten Verwendung der erfindungsgemässen Fördereinrichtung;
- Figur 15:: eine Draufsicht einer weiteren Verwendung der erfindungsgemässen Fördereinrichtung;
- Figur 16:: einen Längsschnitt durch eine Fördereinrichtung;
- Figur 17:: einen Querschnitt durch eine weitere Ausführung einer Fördereinrichtung;
- Figur 18:: einen Querschnitt durch die Antriebsvorrichtung im Bereich des Antriebsorgans gemäss einer weiteren Ausführungsform;
- Figur 19:: einen Querschnitt durch die Antriebsvorrichtung im Bereich des Antriebsorgans gemäss einer weiteren Ausführungsform;
- Figur 20:: eine perspektivische Darstellung einer weiteren Ausführungsform einer Antriebsvorrichtung;
- Figur 21a:: eine Seitenansicht des Förderorgans gemäss der Fördereinrichtung nach Figur 20;
- Figur 21b:: eine Seitenansicht einer zweiten Ausführungsform eines Förderorgans zur Verwendung in der Fördereinrichtung nach Figur 20;
- Figur 22:: eine perspektivische Darstellung einer weiteren Ausführungsform einer Antriebsvorrichtung;
- Figur 23:: eine perspektivische Teilansicht der Fördereinrichtung nach Figur 17 mit einer weiteren Ausführungsform einer Abstützvorrichtung;
- Figur 24:: eine perspektivische Teilansicht einer weiteren Ausführungsform einer erfindungsgemässen Fördereinrichtung;
- Figur 25:: eine perspektivische Teilansicht einer weiteren Ausführungsform einer erfindungsgemässen Fördereinrichtung;
- Figur 26:: eine perspektivische Teilansicht einer weiteren Ausführungsform einer Abstützvorrichtung;
- Figur 27:: eine perspektivische Ansicht einer weiteren Ausführungsform einer erfindungsgemässen Fördereinrichtung;
- Figur 28:: eine perspektivische Ansicht eines Hochregallagers mit erfindungsgemässen Fördereinrichtungen;
- Figur 29:: eine perspektivische Ansicht einer weiteren Ausführungsform einer erfindungsgemässen Fördereinrichtung.

Grundsätzlich sind in den Figuren gleiche Teile mit gleichen Bezugszeichen versehen.

### WEGE ZUR AUSFÜHRUNG DER ERFINDUNG

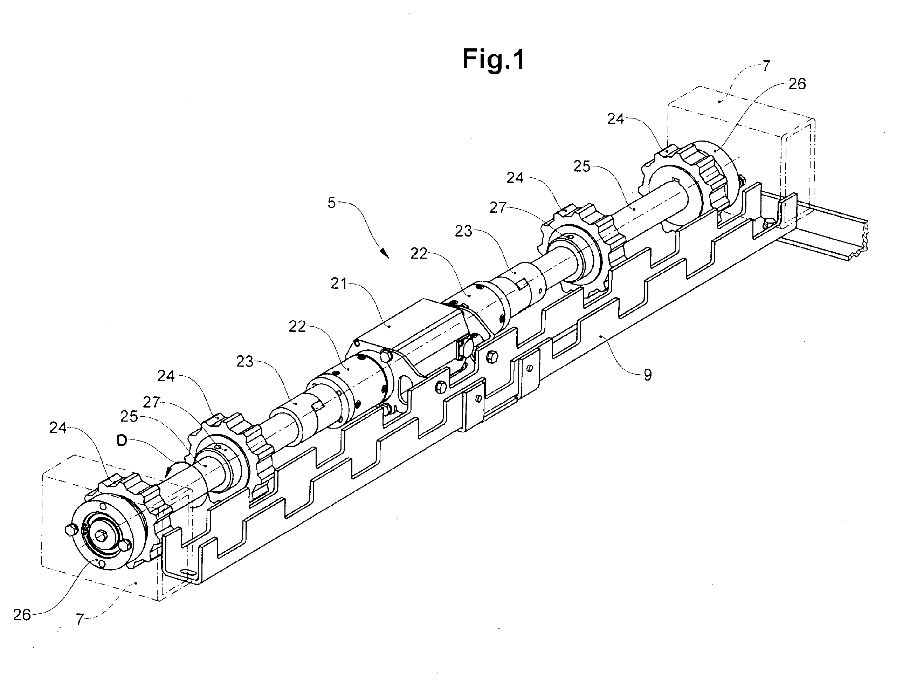

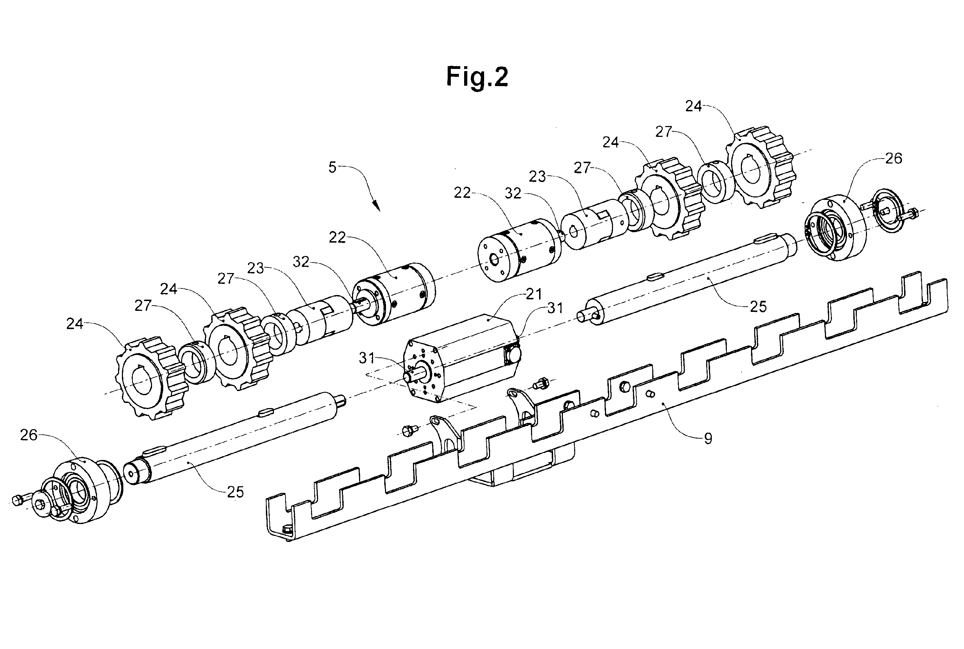

Die in den Figuren 1 und 2 gezeigte Ausführungsform einer erfindungsgemässen Antriebsvorrichtung 5 weist einen mittig angeordneten elektrischen Antriebsmotor 21 auf, von welchem aus in zwei entgegen gesetzte Richtungen die Motorwelle 31 aus dem Motorgehäuse wegführt. Die nachfolgende Beschreibung bezieht auf den Aufbau der Antriebsvorrichtung 5 ausgehend vom mittig angeordneten Motor zur Peripherie hin. Zu beiden Seiten des Antriebsmotors 21 ist je eine Getriebeeinheit 22 an den Antriebsmotor 21 angeflanscht. Von der Getriebeeinheit 22 führt jeweils eine Getriebewelle 32 aus dem Getriebegehäuse heraus. An die Getriebewelle 32 schliesst zu beiden Seiten jeweils eine Wellenkupplung 23 an, welche mit der Getriebewelle 32 drehfest verbunden ist. Die Wellenkupplung 23 wiederum ist drehfest mit einer Antriebswelle 25 verbunden. Die beiden Antriebswellen 25 nehmen jeweils zwei auf dieser drehfest und axial gesicherte und voneinander beabstandete Antriebszahnräder 24 auf. Die Sicherung gegen ein axiales Verschieben geschieht über Sicherungsringe 27. Die Drehsicherung geschieht über eine Formschlussvorrichtung aus Nut und Nocken, welche im kreiszylinderförmigen Aussen- bzw. Innenumfang der ineinander greifenden Bauteile vorgesehen ist. Die Antriebswellen 25 sind mit ihren Endabschnitten in einem Kugellager 26 drehbar gelagert. Die Kugellager 26 sind jeweils an seitlichen Lagerungselementen 7 angebracht. Die Lagerungselemente 7 sind wiederum an der entsprechenden Seitenabschlussvorrichtung 37 angebracht.

Der Aufbau der Antriebsvorrichtung 5 ist spiegelsymmetrisch, wobei die Symmetrieebene mittig durch den Antriebsmotor 21 verläuft. Ferner ist aus vorliegender Anordnung auch ersichtlich, dass die Motorwelle, die Getriebewelle sowie die Antriebswelle und die Antriebszahnräder koaxial angeordnet sind. Mit dieser Konstruktionsweise kann die Antriebsvorrichtung sehr kompakt und platzsparend ausgebildet werden.

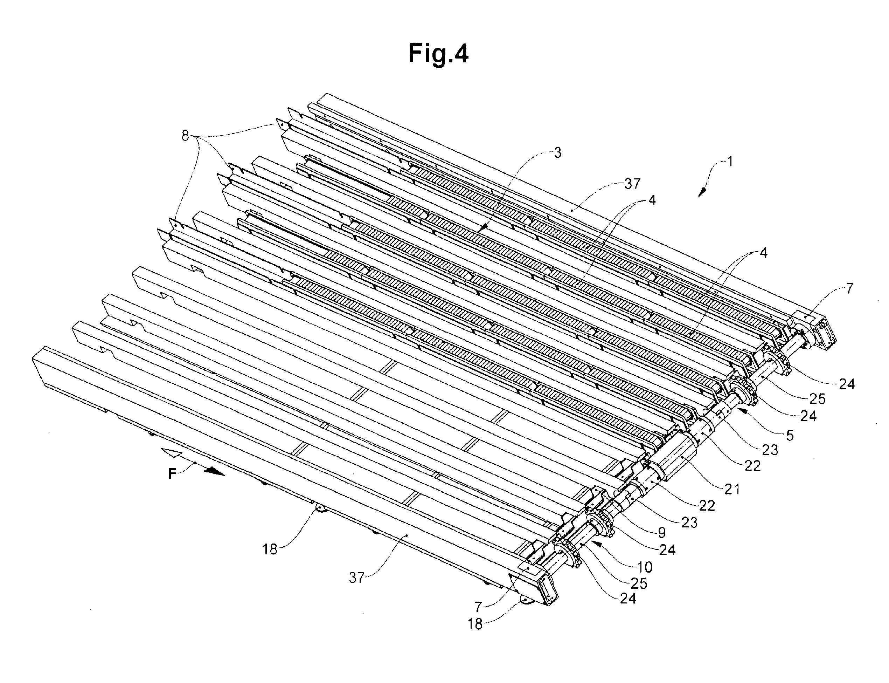

Im Weiteren ist im Bereich der Antriebsvorrichtung 5 ein Querbauteil 9 vorgesehen, an welchem der Antriebsmotor 21 ortsfest montiert ist. Das Querbauteil 9 ist als U-Profil ausgebildet. Die Profilwände weisen eine rechteckzinnenförmige Struktur aus. In die rechteckigen Vertiefungen der Profilwände werden Längsträgerelemente 8 zur Aufnahme von Abstützeinheiten 4 eingeführt (siehe auch Figur 4). Das Querbauteil 9 dient hierbei nicht oder nicht nur zur Abstützung der Längsträgerelemente 8 sondern auch der Ausrichtung derselbigen quer zur Förderrichtung F.

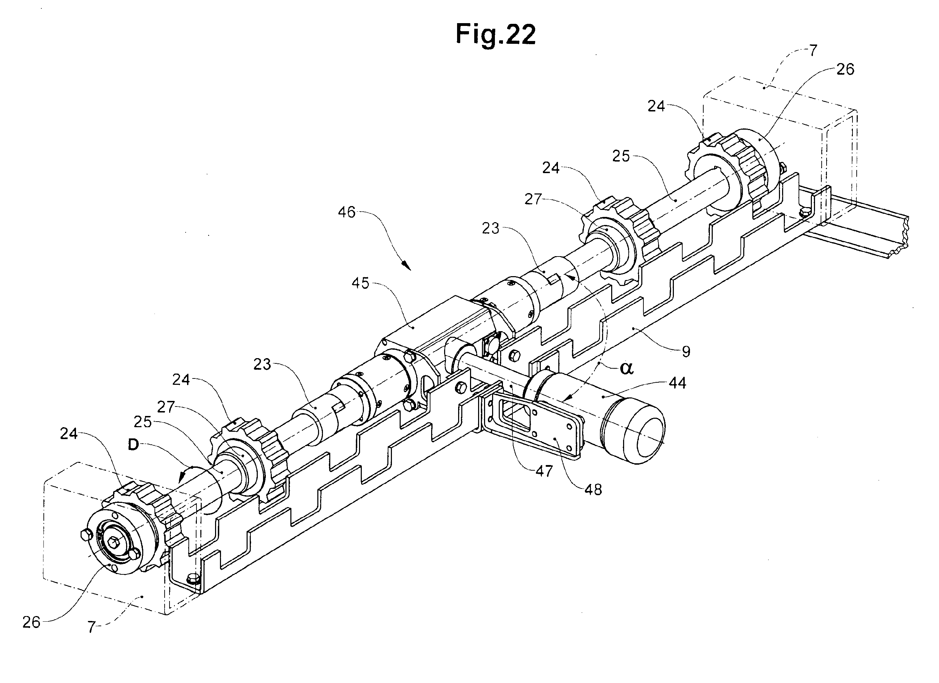

Die Antriebsvorrichtung 46 nach Figur 22 unterscheidet sich von der Antriebsvorrichtung 5 nach Figur 1 lediglich in der Ausführung des Antriebsmotors und in der Befestigung desselbigen an der Fördereinrichtung sowie in der dazugehörigen Getriebeeinheit. In den übrigen Merkmalen entspricht die Ausführungsform nach Figur 22 der Ausführungsform nach Figur 1 und 2, weswegen an dieser Stelle diesbezüglich auf die Beschreibung der besagten Merkmale im Zusammenhang mit der Figur 1 und 2 verwiesen wird. Die betroffenen Merkmale tragen daher in Figur 22 dieselben Bezugszeichen wie in Figur 1 und 2.

Der elektrische Antriebsmotor 44 gemäss Figur 22 ist ebenfalls mittig angeordnet. Im Gegensatz zu Figur 1 ist dieser jedoch quer zur Antriebswelle 25 und in Richtung des gegenüber liegenden, zweiten Kopfendes zurückversetzt angeordnet. Die Motorwelle schliesst zur Antriebswelle 25 bzw. zur Getriebewelle der Getriebeeinheit 45 einen Winkel α von 90° ein.

Das Antriebsmoment wird vom Antriebsmotor 44 auf eine koaxial zur Motorwelle geführten Abtriebswelle 47 übertragen, welche wiederum in eine Getriebeeinheit 45 geführt ist. Die Getriebeeinheit 45 umfasst ein Winkelgetriebe, über welches das von der Abtriebswelle 47 zugeführte Antriebsmoment in die im rechten Winkel zur Abtriebswelle 47 liegende Antriebswelle 25 eingeleitet wird.

Von der Getriebeeinheit 45 führt jeweils zu beiden Seiten eine koaxial zur Antriebswelle 25 geführte Getriebewelle aus dem Getriebegehäuse heraus (in Figur 22 nicht gezeigt). An die Getriebewelle schliesst zu beiden Seiten jeweils eine Wellenkupplung 23 an, welche mit der Getriebewelle drehfest verbunden ist. Die Wellenkupplung 23 wiederum ist drehfest mit einer Antriebswelle 25 verbunden.

Der Antriebsmotor 44 ist über eine Halterung 48 an einem Querbauteil 9 ortsfest montiert. Weitere Details zum Querbauteil 9 sind ebenfalls der Beschreibung zu Figur 1 und 2 zu entnehmen.

Die Antriebsvorrichtungen 5, 46 gemäss Figur 1, 2 und 22 werden bevorzugt in einem ersten Kopfendbereich 10 der Fördereinrichtung 1, welcher zugleich eine Umlenkstelle ist, angebracht.

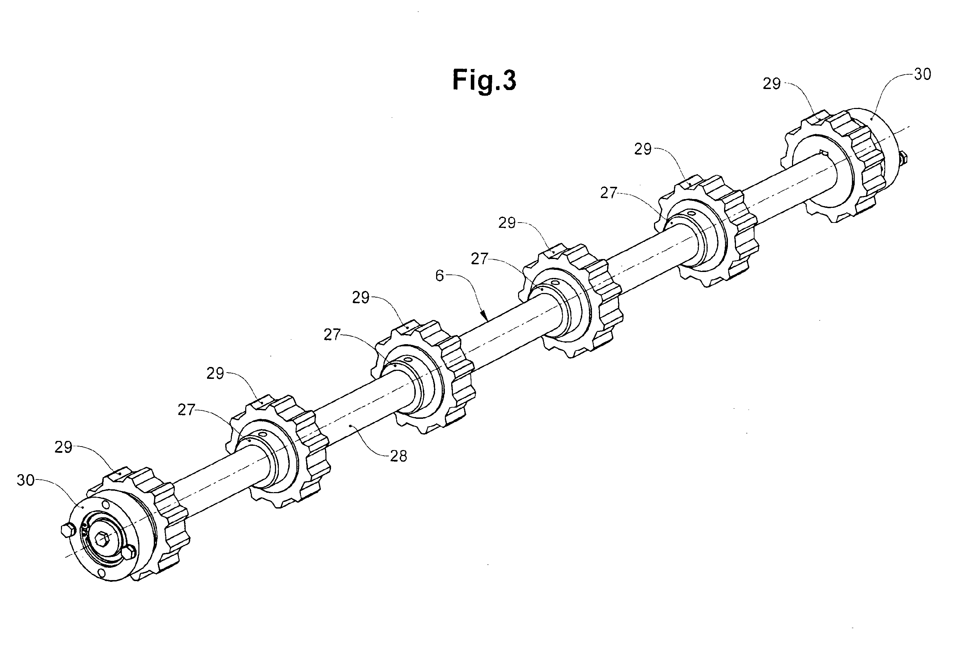

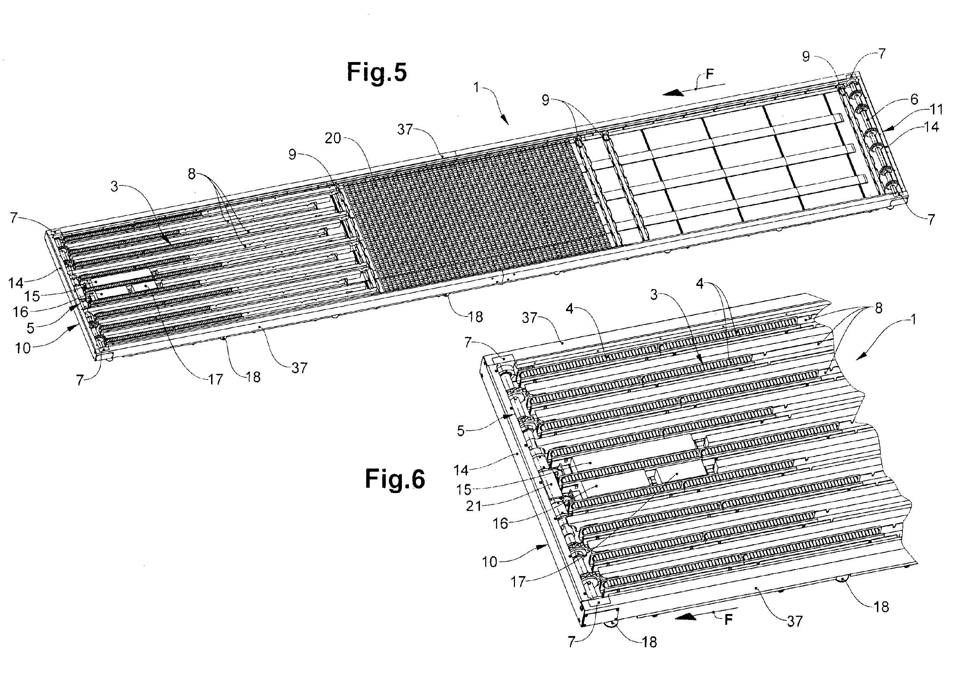

An dem gegenüber liegenden zweiten Kopfendbereich 11 der Fördereinrichtung 1 (siehe Figur 3 und 5) ist beispielsweise eine nicht angetriebene Umlenkvorrichtung 6 vorgesehen.

Die Umlenkvorrichtung (siehe Figur 3) weist eine Umlenkachse 28 auf, welche über Kugellager 30 drehbar am Rahmen bzw. der Seitenabschlussvorrichtung 37 der Fördereinrichtung 1 gelagert ist. Auf die Umlenkachse 28 sind in regelmässigen Abständen zueinander Umlenkzahnräder 29 angeordnet, welche über Sicherungsringe 27 gegen ein axiales Verschieben gesichert sind. Es kann auch vorgesehen sein, dass die Antriebsorgane über Distanzhülsen voneinander beabstandet bzw. gegen ein axiales Verschieben gesichert sind.

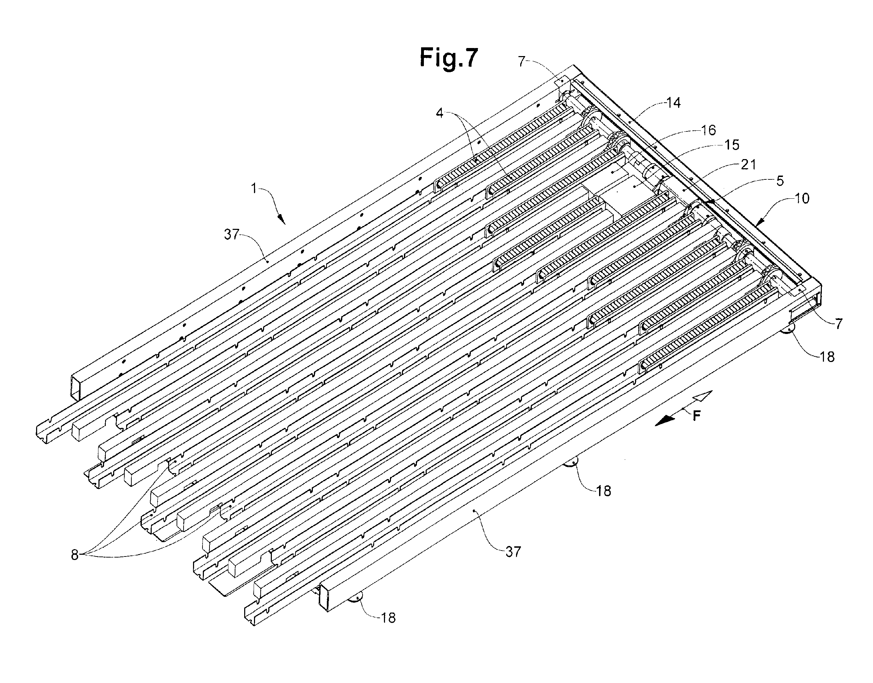

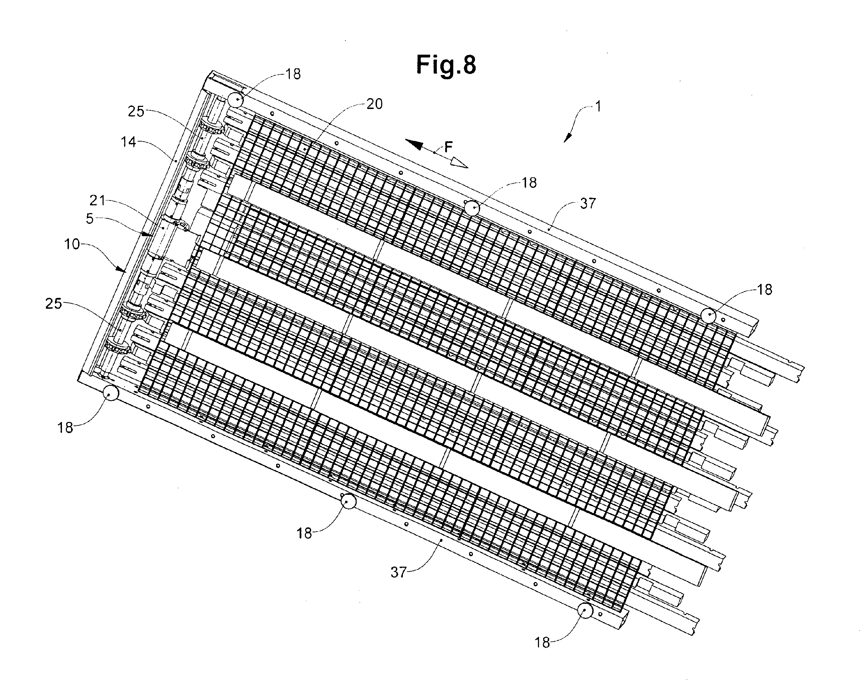

Die Figuren 4 bis 8 zeigen Ausschnitte aus einer erfindungsgemässen Fördereinrichtung 1 in verschiedenen perspektivischen Ansichten. Der Übersicht halber ist das Förderorgan, welches bevorzugt eine Mattenkette ist, in diesen Darstellungen nicht dargestellt. Die Fördereinrichtung 1 weist in einem ersten Kopfendbereich 10 eine Antriebsvorrichtung 5 der in Figur 1 und 2 beschriebenen Art auf. Die Antriebsvorrichtung 5 bzw. deren Antriebswelle 25 ist über Kugellager 26 mit den als seitliche Längsprofile ausgebildeten Seitenabschlussvorrichtungen 37 verbunden. Auf eine wiederholte Beschreibung der in den Figuren 4 bis 8 dargestellten Antriebsvorrichtung 5 wird daher an dieser Stelle verzichtet. Ferner wurden in den Figuren 4 bis 8 der Übersicht halber nicht sämtliche Bezugszeichen zur Antriebsvorrichtung 5 erneut aufgeführt.

Die Fördereinrichtung 1 enthält zwei Seitenabschlussvorrichtungen, auch seitliche Längsabschlussvorrichtungen genannt, in Form von seitlichen Längsprofilen 37, die parallel zur Förderrichtung F verlaufen. Die seitlichen Längsprofile 37 sind in den beiden Kopfendbereichen 10, 11 mit einer Kopfendabschlussvorrichtung in Form von Querprofilen 14 zu einem Tragrahmen zusammen gefügt. Dies geht jedoch nur aus den Figuren 5 bis 7 zeichnerisch hervor. In Figur 4 in das Querprofil 14 im Kopfendbereich nicht dargestellt.

An die seitlichen Längsprofile 37 sind bodenwärtig Stütz- bzw. Nivellierfüsse 18 angebracht, über welche die Fördereinrichtung 1 auf dem Boden oder einer Unterlage abgestützt ist.

Die Fördereinrichtung 1 enthält eine zwischen den seitlichen Längsprofilen 37 angeordnete Abstützvorrichtung 3. Die Abstützvorrichtung 3 umfasst eine Mehrzahl von in Förderrichtung F und parallel zu den seitlichen Längsprofilen 37 verlaufenden Längsträgerelemente 8, die als nach oben zum oberen Trum hin offene U-Profile ausgebildet sind. Die U-Profile 8 sind wie bereits erwähnt mit ihren Endabschnitten in Ausnehmungen in den Profilwänden der kopfseitigen Querprofile 9 eingeführt, und sind über diese quer zur Förderrichtung F ausgerichtet. Selbstverständlich können zwischen den Kopfendbereichen 10, 11 im Abstützbereich noch weitere Querprofile 9 der beschriebenen Art vorgesehen sein, so dass die Längsträgerelemente 8 noch zusätzlich geführt und/oder abgestützt sind.

In die U-förmigen Vertiefungen der Längsträgerelemente 8 sind Abstützeinheiten 4 eingefahren und darin gegen eine Verschiebung in Förderrichtung F gesichert. Die Längsträgerelemente 8 enthalten in ihren Seitenwänden Sicherungsschlitze durch welche Sicherungsmittel geführt und mit den Abstützeinheiten 4 verbunden werden können. Es können eine Mehrzahl von Abstützeinheiten 4 hintereinander in einem Längsträgerelement 8 angeordnet sein, welche z. B. bis an die jeweiligen Kopfendbereiche 10, 11 herangeführt sind. Die Anordnung hintereinander platzierten Abstützeinheiten 4 verläuft parallel zur Förderrichtung F. Quer zur Förderrichtung F sind nun eine Mehrzahl solcher, parallel zueinander und in Förderrichtung F verlaufenden Reihen von Abstützeinheiten 4 vorgesehen. Diese sind in entsprechenden, parallel zueinander angeordneten und voneinander beabstandeten Längsträgerelemente 8 angeordnet. Der Abstand der Längsträgerelemente 8 und entsprechend der Abstützeinheiten 4 zueinander ist frei wählbar. Die Abstützeinheiten 4 benachbarter Reihen können entlang der Förderrichtung gegeneinander versetzt angeordnet sein.

Die beschriebene Anordnung gewährleistet eine flächendeckende jedoch quer zur Förderrichtung F nicht durchgängige rollende Abstützung des Förderorgans 2. Eine durchgängige rollende Abstützung quer zur Förderrichtung F ist jedoch nicht zwingend notwendig, weil das Förderorgan 2 und insbesondere die Glieder von Mattenketten eine gewisse Eigensteifigkeit besitzen.

Unterhalb der Längsträgerelemente 8 ist ein Gitterrost 20 angeordnet (siehe Figur 5), welcher eine tragende bzw. stützende Funktion für die Längsträgerelemente 8 einnimmt. Der untere Trum 13 des Förderorgans 2 ist unterhalb des Gitterrostes 20 durchgeführt.

Die Fördereinrichtung enthält auch einen Transformator 15 zum Transformieren einer Netzspannung in eine Antriebsversorgungsspannung, eine Steuerungseinheit 17 zur Steuerung der Antriebsvorrichtung 5 sowie ein Netzgerät 16 für die Elektronikversorgungsspannung der Steuerungseinheit 17. Die drei Baueinheiten sind jeweils zwischen zwei Abstützeinheiten 4 bzw. zwischen zwei Längsträgerelementen 8 und zwischen dem oberen und unteren Trum 12, 13 der Fördereinrichtung 1 sowie zwischen den beiden Kopfenden 10a, 11 a angeordnet.

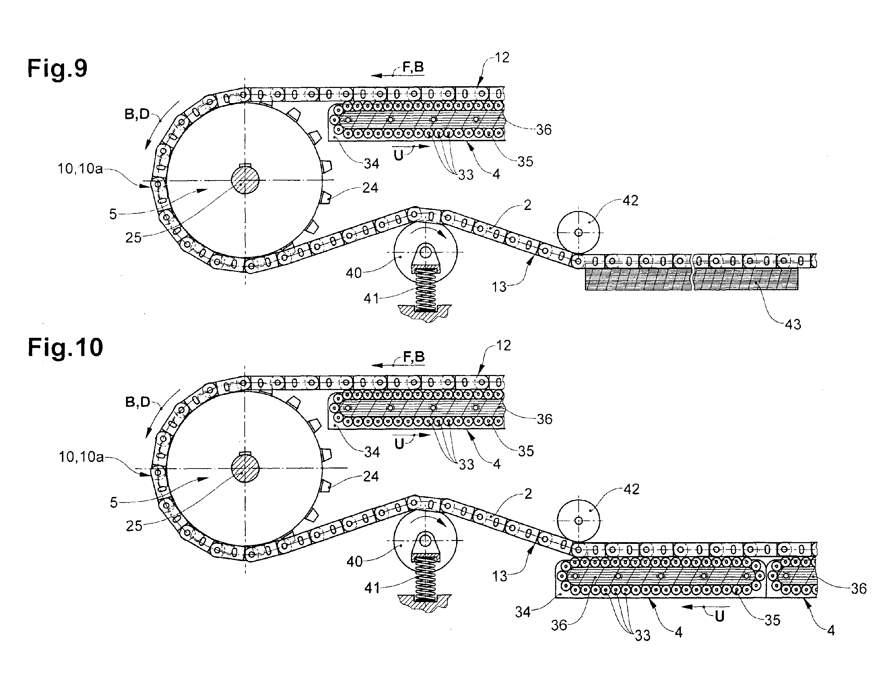

Die Figuren 9 und 10 zeigen eine um die Antriebszahnräder 24 der Antriebsvorrichtung 5 geführte Mattenkette 2. Die Mattenkette 2 bewegt sich entlang der Bewegungsrichtung B, welche im oberen Trum der Förderrichtung F entspricht. Im Bereich der Umlenkung an der Antriebsvorrichtung 5, das heisst im Bereich der Umschlingung mit den Antriebszahnräder 24, entspricht die Bewegungsrichtung B der Mattenkette der Drehrichtung D der Antriebswelle 25. Die Drehrichtung D der Antriebswelle 25 ist so gewählt, dass die Antriebsvorrichtung 5 den oberen Trum 12 mit dem darauf platzierten Fördergut zieht. Die Antriebsvorrichtung 5 kann jedoch auch für einen Umkehr-Betrieb ausgelegt sein, bei welchem das Förderorgan auch in die entgegengesetzte Richtung bewegt werden kann. Entsprechend ist auch eine entgegengesetzte Drehrichtung der Antriebswelle 25 möglich. Diese Antriebskonfiguration beschränkt sich nicht nur auf das vorliegende Ausführungsbeispiel sondern kann ganz allgemein Anwendung in der Erfindung finden.

Die Zähne der Antriebszahnräder 24 greifen formschlüssig in korrespondierende Ausnehmungen in der Mattenkette 2 ein und ermöglichen so eine Kraftübertragung durch Formschluss. Der Umschlingungswinkel beträgt rund 180°, wodurch der obere und untere Trum 12, 13 in eine parallele Führung relativ zueinander zu liegen kommen. Sind die Antriebsorgane als Antriebsrollen ausgebildet, so erfolgt die Kraftübertragung über einen Reibschluss (nicht gezeigt). Dies bedingt jedoch eine genügende Anpressung des Antriebsorgans an die Antriebsrollen.

Im Weiteren ist aus den Figuren 9 und 10 auch zu entnehmen wie die Mattenkette 2 im Bereich des oberen Trums 12 durch den Rollenkörper 35 der Abstützeinheit 4 abrollend abgestützt wird. Die Abstützeinheit 4 beinhaltet den bereits erwähnten Rollenkörper 35. Dieser enthält eine Mehrzahl einzelner Rollen 33, welche um einen Stützkörper 36 umlaufend geführt sind. Die Rollen 33 sind über ein Verbindungsmittel voneinander beabstandet geführt. Die Auflagekräfte der Mattenkette 2 werden vielmehr über die Abrollfläche der Rollen 33 an den Stützkörper 36 übertragen. Die Abstützeinheit 4 enthält ferner Seitenführungselemente 34, welche ein seitliches Abgleiten der Rollen 33 vom Stützkörper 36 verhindern. Die Abstützeinheiten 4 sind selbstverständlich so in der Fördereinrichtung 1 angeordnet, dass deren Umlaufbahn U im Kontaktbereich des Förderorgans 2 parallel zur Förderrichtung F verläuft.

Im Ausführungsbeispiel gemäss Figur 10 ist die Mattenkette 2 auch im Bereich des unteren Trums 13 über die oben beschriebenen Abstützeinheiten 4 abgestützt. Dies ist jedoch nicht zwingend. So ist der untere Trum 13 gemäss Figur 9 über Gleitführungen 43 abgestützt.

Selbstverständlich können zwei oder mehrere Fördereinrichtungen 1 hintereinander zu einer übergeordneten Förderanlage angeordnet werden, wobei jeweils ein erster Kopfendbereich einer ersten Fördereinrichtung mit einem zweiten Kopfendbereich einer zweiten Fördereinrichtung zusammentrifft (nicht gezeigt). Die Förderanlage kann eine Förderstrasse ausbilden. Die Antriebsvorrichtungen der Fördereinrichtungen können steuerungstechnisch miteinander verbunden und über eine zentrale Steuerungsvorrichtung angetrieben sein. Damit lassen sich die einzelnen Fördereinrichtungen der Förderanlage koordiniert und insbesondere synchron antreiben.

In den beiden Ausführungsbeispielen nach Figur 9 und 10 ist der Antriebsvorrichtung 5 ein Umlenkorgan 40 in der Ausführung einer federbelasteten Umlenkrolle zugeordnet. Die Umlenkrolle 40 ist zwischen der Antriebsvorrichtung 5 und der gegenüberliegenden Umlenkvorrichtung angeordnet. Sie wird im Bereich des angetriebenen ersten Kopfendbereiches 10 über eine Druckfeder 41 zum unteren Trum 13 hin gepresst, wobei der untere Trum 13 in Richtung des oberen Trums 12 gedrückt wird. Dadurch wird der Umschlingungswinkel um das oder die Antriebszahnräder 24 vergrössert, z. B. um 5 bis 30° (Winkelgrade). Je grösser der Umschlingungswinkel ist, desto sicherer ist die Kraftübertragung von der Antriebsvorrichtung 5 auf die Mattenkette 2.

Im Anschluss an das Umlenkorgan 40 ist in Richtung der Rückführung des unteren Trums eine Führungsrolle 42 angeordnet, welche den unteren Trum 13 zur Führung hin umlenkt. Die Führung ist wie erwähnt eine Gleitführung 43 oder eine rollenunterstützte Führung.

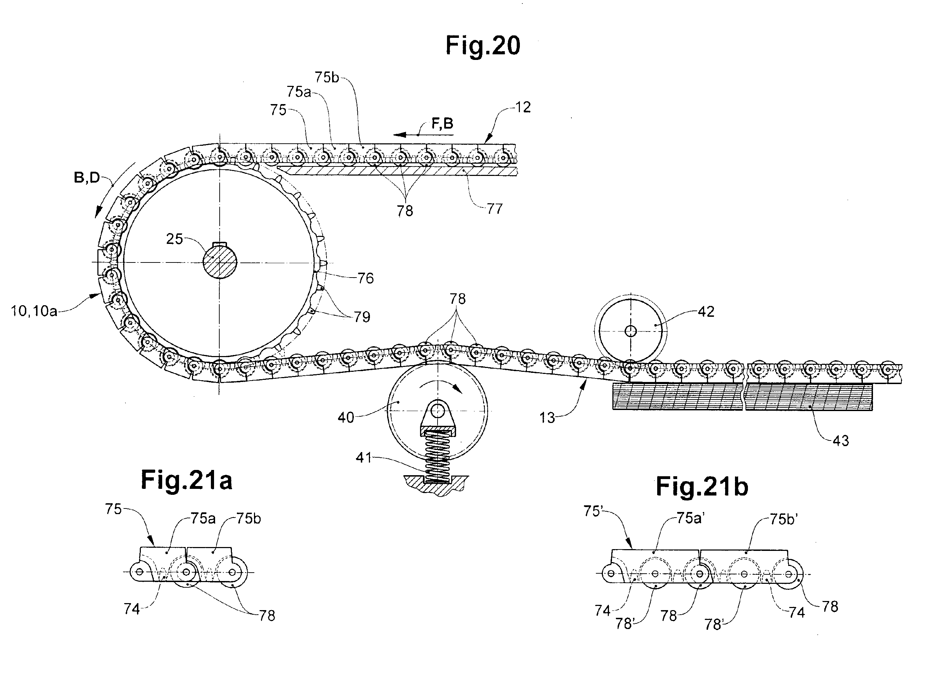

Die Figuren 20, 21a und 21b zeigen eine weitere Ausführungsform einer um ein Antriebszahnrad 76 einer Antriebsvorrichtung geführten Mattenkette 75. Die Mattenkette 75 bewegt sich entlang der Bewegungsrichtung B, welche im oberen Trum der Förderrichtung F entspricht. Der obere Trum 12 der Mattenkette 75 ist über eine Abstützvorrichtung 77 abgestützt.

Im Bereich der Umlenkung an der Antriebsvorrichtung, das heisst im Bereich der Umschlingung mit dem Antriebszahnrad 76, entspricht die Bewegungsrichtung B der Mattenkette der Drehrichtung D der Antriebswelle 25. Die Drehrichtung D der Antriebswelle 25 ist so gewählt, dass die Antriebsvorrichtung den oberen Trum 12 mit dem darauf platzierten Fördergut zieht.

Im Unterschied zur Ausführungsform nach Figur 9 und 10 sind an der Mattenkette 75, 75' an der, der Abstützvorrichtung 77 zugewandten Flächenseite eine Mehrzahl und bezüglich der Mattenkette 75, 75' ortsfest und axial drehbar gelagerte Stützrollen 78 angebracht.

Die Stützrollen 78 werden gemeinsam mit der Mattenkette 75, 75' in Förderrichtung F bewegt. Sie kooperieren dabei mit der Abstützvorrichtung 77, indem diese auf dieser abrollen. Für eine flächige Abstützung enthält die Mattenkette 75, 75' eine Mehrzahl von Stützrollen 78, welche über die gesamte Länge der Mattenkette 75, 75' voneinander beabstandet angeordnet sind und so für eine gleichmässige rollende Abstützung auf der Abstützvorrichtung 77 sorgen. Die Stützrollen 75, 75' erstrecken sich über die gesamte Breite der Mattenkette 75. Die Abstützvorrichtung 77 bildet hierzu für die Rollen eine ebene Abrollfläche aus.

Stützrollen 78 sind jeweils an den Verbindungsstellen zweier Mattenkettenglieder 74a, 74a'; 74b, 74b' angebracht, wobei die Drehachsen der Stützrollen 78 und die Verbindungsachsen der Mattenkettenglieder 74a, 74a'; 74b, 74b' jeweils gemeinsam ausgebildet sind.

Gemässe einer Weiterbildung dieser Ausführungsform kann die Mattenkette 75' zwischen den Verbindungsachsen jeweils noch weitere Stützrollen 78' mit zusätzlichen Drehachsen aufweisen. D.h., an den einzelnen Mattenkettengliedern 74a', 74b' können zusätzliche Stützrollen 78' angeordnet sein (Figur 21b).

Das Antriebszahnrad 76 ist so ausgestaltet, dass die Stützrollen 78, 78' an der Mattenkette 75, 75' in korrespondierende Vertiefungen am Antriebszahnrad 76 greifen. Ferner enthält das Antriebszahnrad 76 Zähne 79, welche in korrespondierende Vertiefungen 74 an der diesem zugewandten Seite der Mattenkette 75, 75' greifen. Auf diese Weise wird die zur Übertragung eines Antriebsmomentes vom Antriebszahnrad 76 auf die Mattenkette 75, 75' notwendige Formschlussverbindung hergestellt.

Im Weiteren ist der Antriebsvorrichtung nach Figur 20 analog zur Ausführungsform nach Figur 9 ein Umlenkorgan 40 in der Ausführung einer federbelasteten Umlenkrolle zugeordnet. Die Umlenkrolle 40 ist zwischen der Antriebsvorrichtung und der gegenüberliegenden Umlenkvorrichtung angeordnet. Sie wird im Bereich des angetriebenen ersten Kopfendbereichs 10 über eine Druckfeder 41 zum unteren Trum 13 hin gepresst, wobei der untere Trum 13 in Richtung des oberen Trums 12 gedrückt wird. Dadurch wird der Umschlingungswinkel um das Antriebszahnrad 76 vergrössert.

Im Anschluss an das Umlenkorgan 40 ist in Richtung der Rückführung des unteren Trums eine Führungsrolle 42 angeordnet, welche den unteren Trum 13 zu einer Gleitführung 43 hin umlenkt. Der untere Trum 13 der Mattenkette 75, 75' wird anschliessend über die Gleitführungen 43 gegen unten abgestützt. Für weitere Details hierzu wird auf die Beschreibung zu Figur 9 verwiesen.

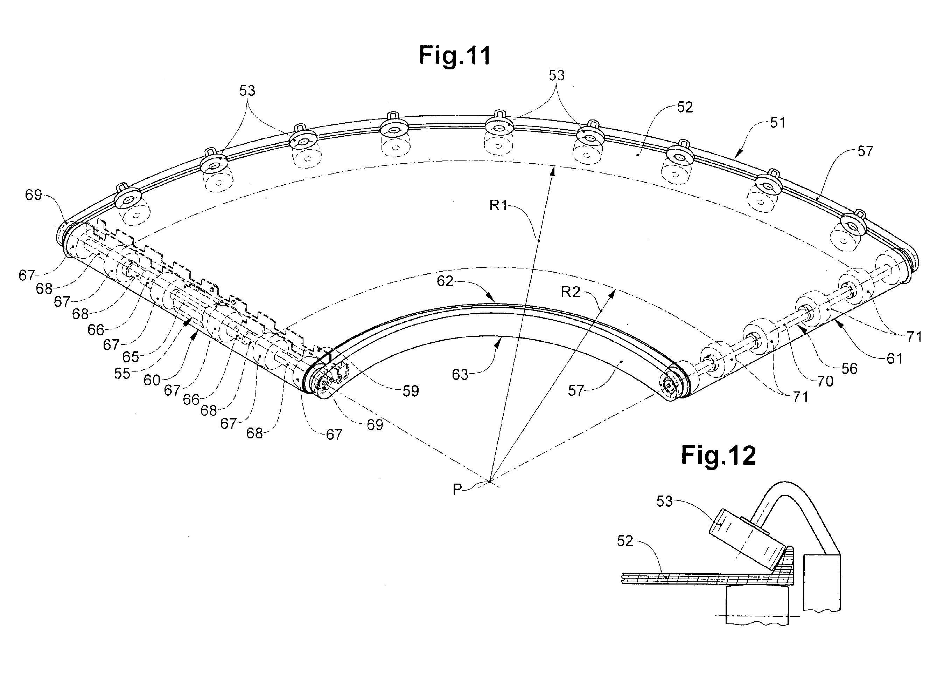

Die Figuren 11 und 12 zeigen eine weitere Ausführungsform der erfindungsgemässen Fördereinrichtung 51. Diese ist im vorliegenden Beispiel als Kurvenförderer ausgebildet, mittels welchem das Fördergut um eine Kurve gefördert werden kann. Der Kurvenförderer 51 wird z. B. mit linear fördernden Fördereinrichtungen der zuvor beschriebenen Art zu einer Förderanlage kombiniert. Der Kurvenförderer 51 bildet im vorliegenden Ausführungsbeispiel einen Förderwinkel von 90° aus. D.h. die Förderrichtung des vom ersten Kopfendbereich 60 kommenden Fördergutes wird zum zweiten Kopfendbereich 61 hin um 90° umgelenkt.

Die besagte Fördereinrichtung 51 enthält ebenfalls einen ersten Kopfendbereich 60 mit einer Antriebsvorrichtung 55 und ein in einem rechten Winkel zu diesem stehenden zweiten Kopfendbereich 61 mit einer Umlenkvorrichtung 56. Das Förderorgan 52, hier ein in einem rechten Winkel geführtes Förderband, wird in den beiden Kopfendbereichen 60, 61 umgelenkt und bildet so einen oberen Trum 62 mit einem Förderabschnitt und einen unteren Trum 63 mit einem Rückführabschnitt aus. Der obere Trum ist zwischen den Kopfendbereichen 60, 61 gegen unten ebenfalls über eine Abstützvorrichtung abgestützt.

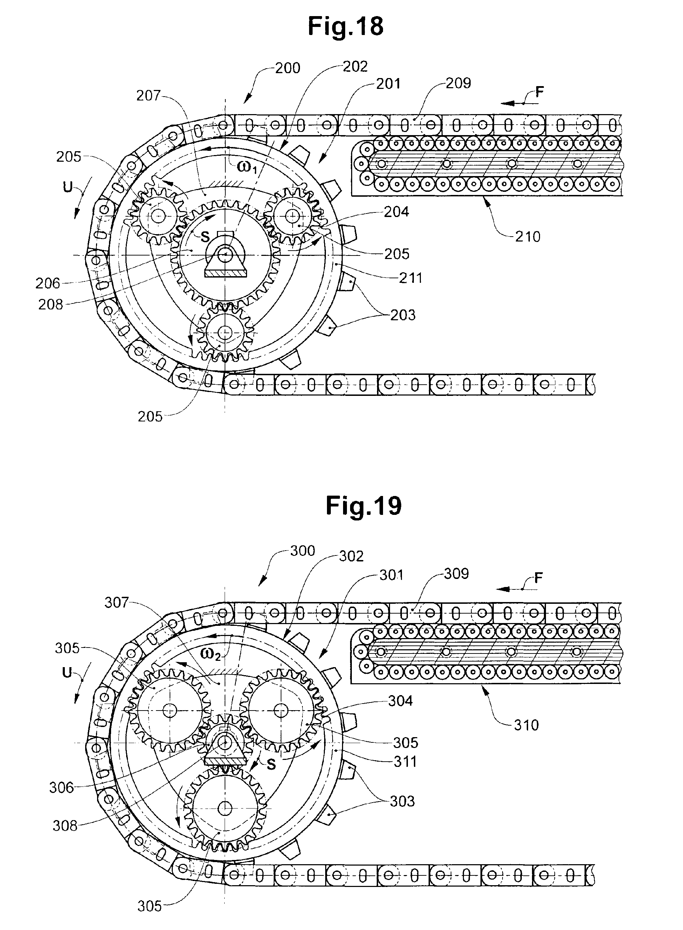

Das Förderorgan 52 wird entlang einer Kreisbahn geführt, welche durch einen Kreismittelpunkt P definiert ist. Die Antriebsorgane 67 sind nun in unterschiedlichen radialen Abständen R1, R2 zum Kreismittelpunkt entlang der Drehachse der Antriebsvorrichtung 55 angeordnet. Die Drehachse der Antriebsvorrichtung 55 ist radial zum Kreismittelpunkt P ausgerichtet. Das Förderorgan 52 bewegt sich nun am Aussenbogen mit einer höheren Geschwindigkeit um die Umlenkung im Kopfendbereich als im Innenbogen. Entsprechend dreht sich das im grösseren radialen Abstand R1 angeordnete Antriebsorgan 67 im Förderbetrieb mit einer höheren Winkelgeschwindigkeit ω₁ als das im kleineren radialen Abstand R2 mit der Winkelgeschwindigkeit ω₂ betriebene Antriebsorgan (siehe auch Figur 18 und 19).

Die Antriebsvorrichtung 55 ist ebenfalls spiegelsymmetrisch aufgebaut und weist einen mittig angeordneten elektrischen Antriebsmotor 65 auf. Beidseits der Antriebsvorrichtung ist jeweils eine Wellenkupplung 66 angeordnet. Das Getriebe ist im Unterschied zur Ausführungsform nach Figur 1 und 2 entweder im Antriebsmotor 65 integriert oder es ist kein solches vorgesehen. Der Antriebsmotor 65 ist zu beiden Seiten mit einer Antriebswelle 68 verbunden, auf welcher eine Mehrzahl von Antriebsrollen 67 drehgesichert und axial gesichert aufgesetzt sind. Der Antrieb des Förderbandes 52 erfolgt über Reibschluss. Die Antriebswelle 68 ist an ihrem freien Ende über Kugellager drehbar an einer Seitenabschlussvorrichtung 57 gelagert. Der Antriebsmotor 65 ist ebenfalls an einem Querbauteil 59 befestigt, welches seinerseits mit der Seitenabschlussvorrichtung 57 verbunden ist.

Die Umlenkvorrichtung umfasst eine Umlenkachse 70, welche mit ihren freien Endabschnitten über Kugellager in einer Seitenabschlussvorrichtung 57 drehbar gelagert ist. Auf der Umlenkachse 70 sind eine Mehrzahl von Umlenkrollen 71 axial gesichert aufgesetzt.

Das Förderband 52 ist an seinem Aussenbogen über Führungs- und Andrückrollen 53 geführt. Die Führungsrollen 53 drückt das Förderband 52 in Richtung Abstützvorrichtung und spannen es gleichzeitig radial nach aussen. Das Förderband 52 würde sich ansonsten durch die Führung im Aussenbogen wölben.

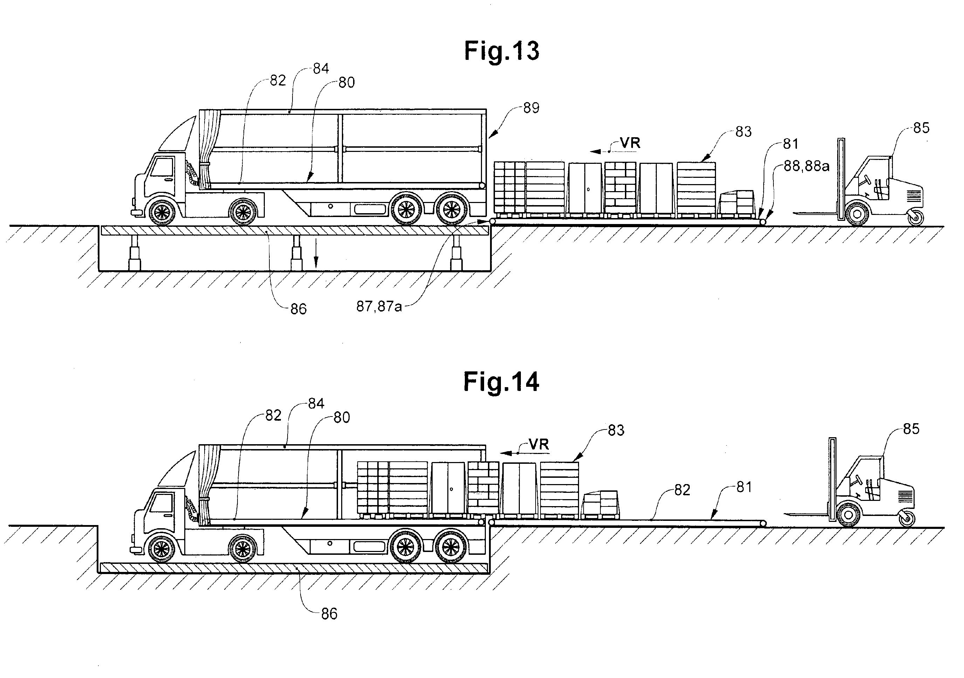

Die Figuren 13 und 14 stellen eine erste mögliche Anwendung der erfindungsgemässen Fördereinrichtung 80, 81 auf dem Gebiet des Verladens von Gütern, insbesondere von palettierten Gütern, auf Schienen- oder Strassenfahrzeugen, wie LKW's, dar. Die Fördereinrichtungen 80, 81 weisen ebenfalls eine umlaufende Mattenkette 82 oder Förderband auf, welche(s) in zwei einander entgegen gesetzten Kopfendbereichen 87, 88 umgelenkt wird. Die Anwendung sieht eine erste Fördereinrichtung 81 als Verladefördereinrichtung vor. Diese ist an einer Verladerampe positioniert. Der erste Kopfendbereich 87 der Verladefördereinrichtung 81 ist zu einem Transportfahrzeug 84 hin gerichtet und endet vorzugsweise unmittelbar vor der Verladeöffnung 89 des Transportfahrzeugs 84. Der zweite, gegenüber liegende Kopfendbereich 88 ist zu einer Zubringerseite hin gerichtet, auf welcher mittels Hebe- und Fördermittel, wie z. B. mittels Gabelstapler 85 gemäss Figur 13 und 14 , das Transportgut 83, z. B. palettiertes Transportgut, der Verladefördereinrichtung 81 zugeführt und übergeben wird. Das Transportgut 83 wird über die Verladefördereinrichtung 81 zur Verladeöffnung 89 des Transportfahrzeugs 84 gefördert. Auf der Ladefläche des Transportfahrzeugs 84 ist eine als Laderaumfördereinrichtung ausgebildete, weitere erfindungsgemässe Fördereinrichtung 80 angeordnet. Der Laderaum kann als offener oder geschlossener Laderaum ausgebildet sein. Die Laderaumfördereinrichtung 80 übernimmt an der Verladeöffnung 89 das von der Verladefördereinrichtung 81 zugeführten Fördergut 83 und fördert dieses entlang der Ladefläche in den Laderaum.

Da die Antriebsvorrichtung der Fördereinrichtung 80 mit einer Spannung von 24 V betrieben wird, kann die Laderaumfördereinrichtung 80 direkt an das Bordnetz, welches bei Fahrzeugen in der Regel ebenfalls mit 24 V betrieben wird, angeschlossen werden. Hierzu ist keine Umrüstung notwendig.

Wie aus dem Stand der Technik bekannt, wird zum Verladen des Fördergutes 83 die Ladefläche des Transportfahrzeuges 84 auf das Niveau der Verladerampe gebracht, bzw. die Förderflächen der beiden Fördereinrichtungen 80, 81 werden auf das gleiche Niveau gebracht. Hierzu kann das Transportfahrzeug 84 über eine Hebebühne 86 angehoben und abgesenkt werden.

Sowohl die Laderaumfördereinrichtung 80 als auch die Verladefördereinrichtung 81 weisen in beiden Kopfendbereichen 87, 88 eine erfindungsgemässe Antriebsvorrichtung 3 auf. Auf diese Weise kann die Mattenkette 82 in einer Vorwärts- und Rückwärtsrichtung betrieben werden.

Die Laderaumfördereinrichtung kann auch in einem Container, wie Fracht- oder Schiffscontainer zum Be- und Entladen des Containers Verwendung finden.

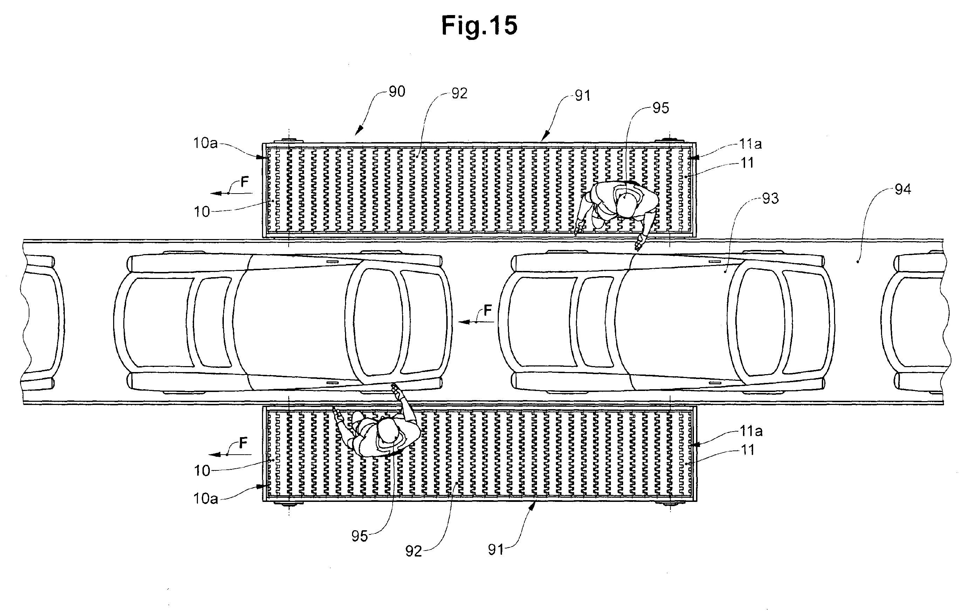

Die Figur 15 stellt eine weitere wichtige Anwendung der erfindungsgemässen Fördereinrichtung 91 als Werker-Mitfahrband dar. Die Figur 15 zeigt eine Montagestrasse 90 für PKW's (Personenkraftwagen). Selbstverständlich muss es sich bei den Objekten auf der Montagestrasse 90 nicht zwingend um PKW's handeln. Die PKW's werden über eine Förderanlage 94, z. B. auf einem Förderband oder in hängender Förderung, entlang der Montagestrasse 90 gefördert. Während der Förderung der PKW's werden durch seitlich an der Montagestrasse 90 positionierte Werkmitarbeiter 95 Montageschritte bzw. Arbeitsschritte an den PKW's vorgenommen. Damit die Werkmitarbeiter 95 die notwendigen Arbeitsschritte an den PKW's durchführen können, ohne dass die Förderung derselbigen gestoppt oder verlangsamt werden muss, werden die Werkmitarbeiter 95 auf seitlich von der Montagestrasse 90 angeordneten Werker-Mitfahrbänder 91 mit gleicher, höherer oder geringerer Geschwindigkeit als die PKW's parallel zu den PKW's mitgefördert. Das Werker-Mitfahrband 91 wird mit einer Mattenkette 92 betrieben.

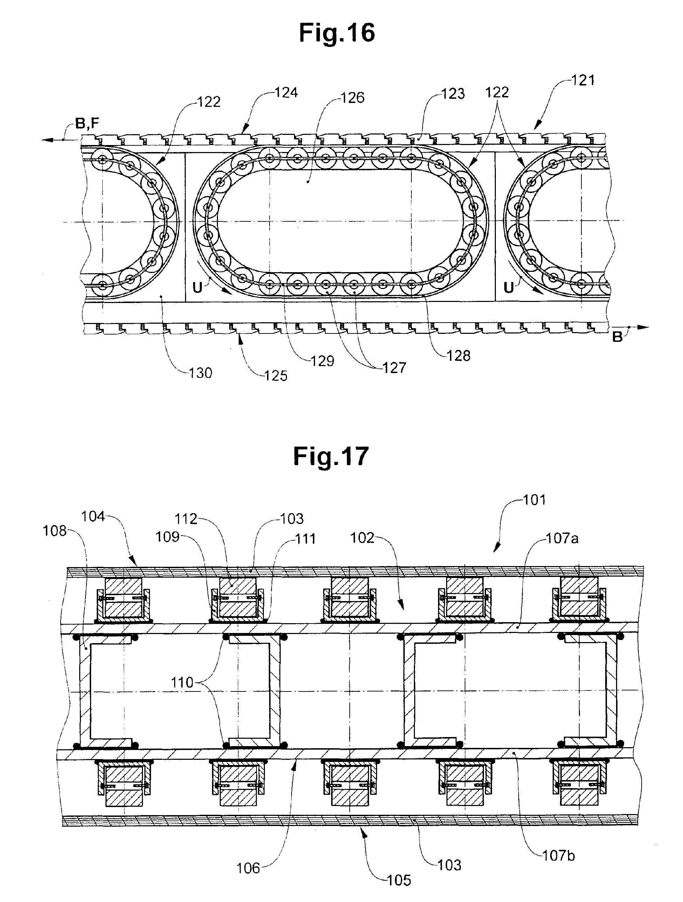

Die Fördereinrichtung 121 gemäss Figur 16 zeigt im Längsschnitt den oberen Trum 124 und unteren Trum 125 einer Mattenkette 123. Der obere Trum 124 ist über eine Mehrzahl von in Bewegungsrichtung B der Mattenkette 123 hintereinander angeordneten Abstützeinheiten 122 rollend abgestützt. Die Abstützeinheit 122 enthält einen Stützkörper 126 sowie einen Rollenkörper mit einer Mehrzahl von Stützrollen 127, welche in einer geschlossenen Umlaufbahn U um den Stützkörper 126 angeordnet sind. Die Stützrollen 127 rollen entlang des Stützkörpers 126 ab. Am Aussenumfang der Abstützeinheit 122 ist ein Schutzband 128 angeordnet, welches über den Stützrollen 127 liegt, so dass die Mattenkette 123 nicht direkt auf den Stützrollen 127 abrollt. Das Schutzband 128 ist als geschlossenes Band um den Stützkörper 126 umlaufend angeordnet. Die Abstützeinheiten 122 verfügen ferner über Seitenführungselemente 130, welche ein seitliches Abgleiten der Stützrollen 127 vom Stützkörper 126 verhindern.

Die Stützrollen 127 sind über ein flächenförmiges Verbindungselement 129 miteinander zum Rollenkörper verbunden, wobei das Verbindungselement 129 lediglich zum Führen und Beabstanden der Rollen dient und keine Stützkräfte aufnimmt.

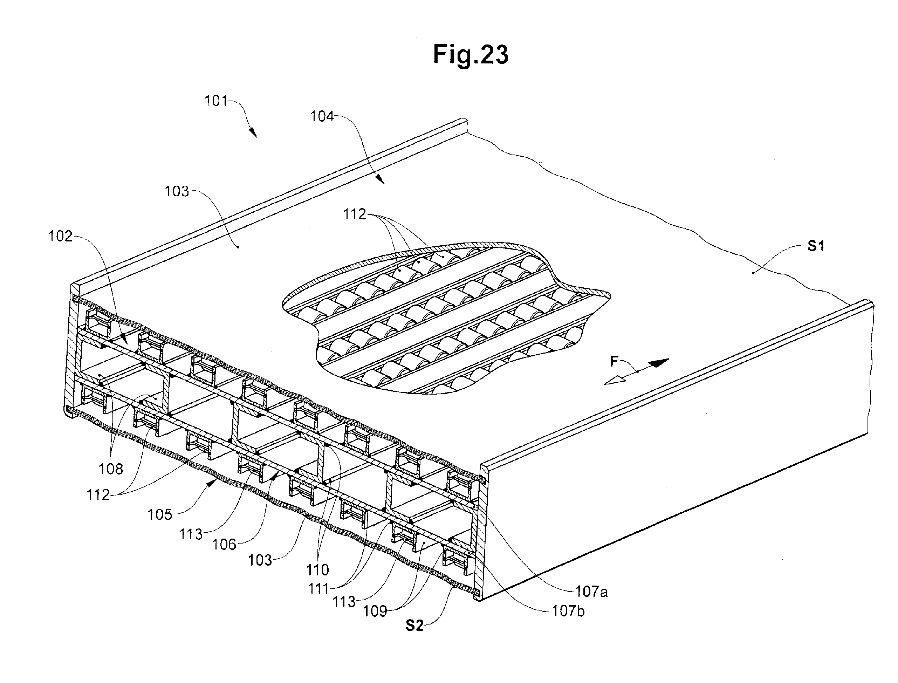

Die Fördereinrichtung 101 gemäss Figur 17 und 23 umfasst ein Förderorgan in Form eines Förderbandes 103 mit einem oberen Trum 104 und einem unteren Trum 105, welches an zwei, einander gegenüberliegenden Kopfendbereichen (nicht gezeigt) umgelenkt wird. Zwischen den beiden Kopfendbereichen ist eine Abstützvorrichtung 102 zur rollenden Abstützung des oberen Trums 104 angeordnet.

Die Abstützvorrichtung 102 enthält einen flächig ausgedehnten Stützkörper 106, welcher jeweils ein oberes, dem oberen Trum 104 zugewandtes und unteres, dem unteren Trum 105 zugewandtes Plattenelement 107a, 107b aus z. B. Metall, wie Aluminium, oder Kunststoff umfasst. Die beiden Plattenelemente 107a, 107b werden durch Verbindungsprofile 108, welche zwischen diesen angeordnet sind, zusammengehalten und voneinander beabstandet. Die Verbindungsprofile 108 sind hier beispielhaft C- bzw. U-formig ausgebildet. Die Verbindungsprofile 108 bestehen z. B. ebenfalls aus Metall, wie Aluminium, oder Kunststoff.

Auf den Plattenelementen 107a, 107b sind Aufnahmekörper in Form von parallel nebeneinander und parallel zur Bewegungsrichtung des Förderbandes 103 verlaufenden C- bzw. U-förmigen Aufnahmeprofilen 109 angebracht. Diese können z. B. aus Kunststoff oder Metall, wie Aluminium sein. Die Aufnahmeprofile 109 sind Längsprofile. Die Aufnahmeprofilen 109 bilden einen Aufnahmeraum für in Bewegungsrichtung des Förderbandes 103 hintereinander angeordnete Stützrollen 112 aus. Die Stützrollen 112 sind rollend in den Aufnahmen der Aufnahmeprofile 109 geführt.

Die Verbindungsprofile 108 sind mit den Plattenelementen 107a, 107b unter Ausbildung von flächigen Klebeverbindungen 110 über Profilwände flächig verklebt. Die Längsprofile 109 sind ebenfalls unter Ausbildung von flächigen Klebeverbindungen 111 über den Profilboden mit der aussen liegenden, freien Flächenseite des dazugehörigen Plattenelementes 107a, 107b verklebt. Anstelle von Klebeverbindungen sind auch Schweissverbindungen denkbar.

Der Stützkörper 106 weist nun sowohl auf seiner, dem oberen Trum 104 als auch auf seiner, dem unteren Trum 105 zugewandten Flächenseite der Plattenelemente 107a, 107b jeweils vertikal übereinander angeordnete C- bzw. U-förmige Aufnahmeprofile 109 auf.

Paarweise übereinander angeordnete und vertikal aufeinander ausgerichtete Aufnahmeprofile 109 bilden zusammen mit endseitig angeordneten Verbindungskörpern (nicht gezeigt) jeweils eine um den Stützkörper 106 umlaufende Umlaufbahn U für die Stützrollen 112 aus.

Die Stützrollen 112 werden also in den übereinander angeordneten Aufnahmeprofilen 109 um den Stützkörper 106 umlaufend geführt.

Die Stützrollen 112 sind über einen flachen, flexiblen Verbindungskörper 113 zu einem Rollenkörper verbunden.

Die Figuren 18 und 19 zeigen weitere Ausführungsvarianten von Antriebsvorrichtungen 201, 301 einer Fördereinrichtung 200, 300. Die Antriebsvorrichtung 201, 301 enthält jeweils ein Antriebsorgan 202, 302 mit einer Aussenverzahnung 203, 303, welche formschlüssig in entsprechende Aussparungen einer, wenigstens teilweise um das Antriebsorgan 202, 302 geschlungenen Mattenkette 209, 309 greift. Das Förderorgan muss jedoch nicht zwingend eine Mattenkette sein. Die Mattenkette 209, 309 ist mit ihrem oberen Trum auf Abstützeinheiten 210, 310 der beschriebenen Art abgestützt, welche mit Rollenkörpern bestückt sind.

Die Aussenverzahnung 203, 303 ist am Aussenumfang eines drehbaren Hohlrades 211, 311 angeordnet, welches Teil eines Planetengetriebes ist. Das Hohlrad 211, 311 weist eine Innenverzahnung 204, 304 auf. Das Planetengetriebe umfasst ferner ein über die Antriebswelle in Drehrichtung S drehbar gelagertes Sonnenrad 206, 306, welches entsprechend mit der Antriebswelle gekoppelt ist. Das Sonnenrad 206, 306 ist jeweils von drei gleichmässig voneinander beabstandeten Planetenrädern 205, 305 umgeben. Diese greifen mit ihrer Verzahnung einerseits nach Innen in die Verzahnung des Sonnenrades 206, 306 und andererseits nach Aussen in die Innenverzahnung 204, 304 des Hohlrades 211, 311 ein. Die Planetenräder 205, 305 sind jeweils drehbar an einem starr gelagerten Planetenradträger 207, 307 angeordnet. Der Planetenradträger 207, 307 ist zum Beispiel am Querbauteil befestigt (nicht gezeigt).

Gemäss dem Ausführungsbeispiels nach Figur 18 weist die Innenverzahnung des Hohlrades 211 die doppelte Anzahl Zähne wie das Sonnenrad 206 auf, so dass sich ein Übersetzungsverhältnis von 2:1 einstellt. Gemäss dem Ausführungsbeispiel nach Figur 19 weist die Innenverzahnung des Hohlrades 211 die vierfache Anzahl Zähne wie das Sonnenrad 206 auf, so dass sich ein Übersetzungsverhältnis von 4:1 einstellt. Die Winkelgeschwindigkeit ω₁ des Hohlrades 211 nach Figur 18 ist folglich grösser als die Winkelgeschwindigkeit ω₂ des Hohlrades 311 nach Figur 19.

Handelt es sich beim Antriebsmotor um einen Trommelmotor, welcher nicht Gegenstand vorliegender Patentansprüche ist (nicht gezeigt), so wird der Planetenradträger anstelle des Sonnenrades angetrieben. Die Sonnenräder sind hier drehfest auf einer zentrischen, starren Achse angeordnet.

Die Ausführungsformen gemäss Figur 18 und 19 finden beispielsweise in Kurvenförderer, wie in Figur 11 beschrieben, Verwendung. Die entlang der Drehachse der Antriebsvorrichtung angeordneten Antriebsorgane weisen entsprechend unterschiedliche Übersetzungsverhältnisse auf. Dadurch bewegen sich die Antriebsorgane mit unterschiedlichen Winkelgeschwindigkeiten ω₁, ω₂.

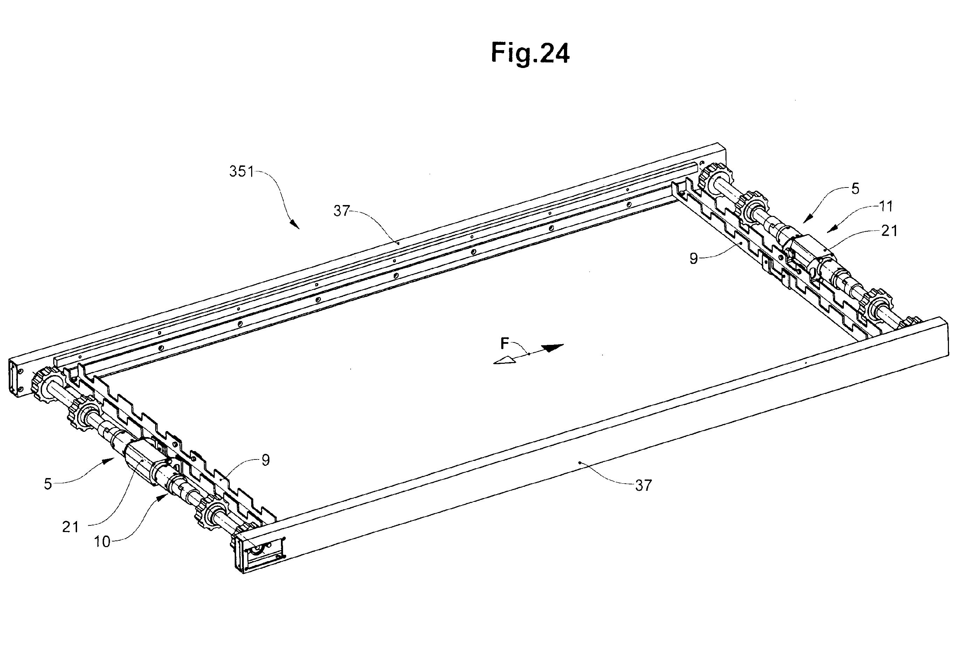

Die in Figur 24 gezeigte Teilansicht einer weiteren Ausführungsform einer erfindungsgemässen Fördereinrichtung 351 enthält in beiden Kopfendbereichen 10, 11 eine erfindungsgemässe Antriebsvorrichtung 5 mit jeweils einem Antriebsmotor 21 gemäss den Figuren 1 und 2. Eine oder beide der Antriebsvorrichtungen 46 in den Kopfendbereichen 10, 11 kann jedoch auch gemäss Figur 22 ausgestaltet sein.

Die Antriebsvorrichtungen 5 sind jeweils mit ihren seitlichen Enden an einer Seitenabschlussvorrichtung 37 befestigt. Die Seitenabschlussvorrichtung 37 umfasst seitliche Längsprofile. Ebenfalls dargestellt sind Querbauteile 9, welche den Antriebsvorrichtungen 5 zugeordnet sind. Für weitere diesbezügliche Details wird auf die Figuren 1 und 2 und die dazugehörige Beschreibung verwiesen, welche hier ebenfalls zutrifft.

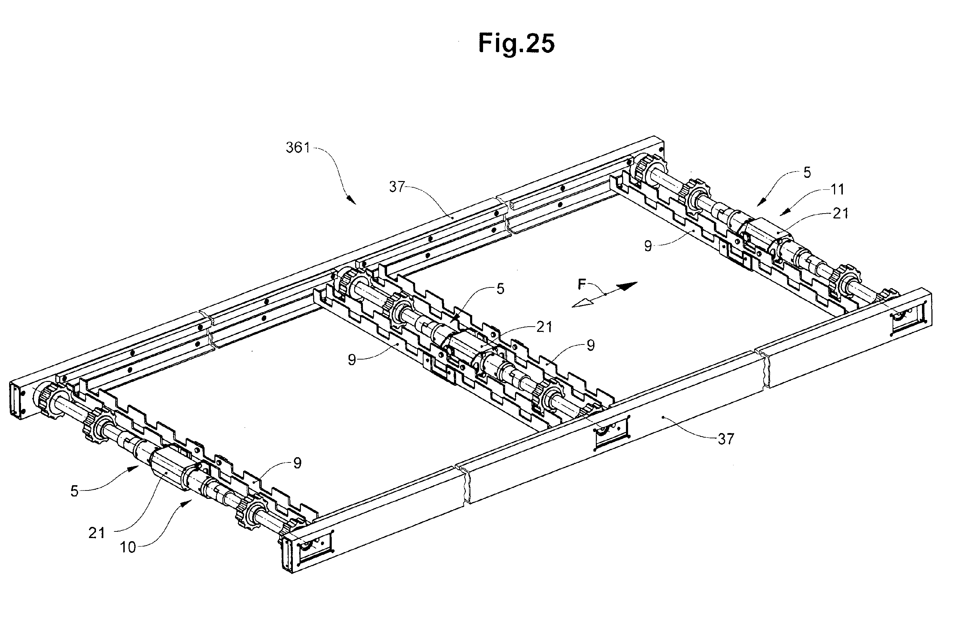

Die in Figur 25 gezeigte Teilansicht einer weiteren Ausführungsform einer erfindungsgemässen Fördereinrichtung 361 entspricht der Ausführungsform gemäss Figur 24, jedoch mit dem Unterschied, dass die vorliegende Ausführungsform eine weitere Antriebsvorrichtung 5 mit einem Antriebsmotor 21 gemäss Figur 1 und 2 aufweist, welche zwischen den beiden, in den Kopfendbereichen 10, 11 angeordneten Antriebsvorrichtungen 5 angeordnet ist. Die zusätzliche Antriebsvorrichtung 5 ist ebenfalls mit ihren seitlichen Enden jeweils an der angrenzenden Seitenabschlussvorrichtung 37 befestigt. Der zusätzlichen Antriebsvorrichtung ist beidseitig ein Querbauteil 9 der bereits beschriebenen Art zugeordnet. Der Antriebsmotor 21 ist an einem der Querbauteile 9 befestigt.

Weitere Details, insbesondere zur Antriebsvorrichtung 5, können den Figuren 1, 2 und 24 sowie der dazugehörigen Beschreibung entnommen werden.

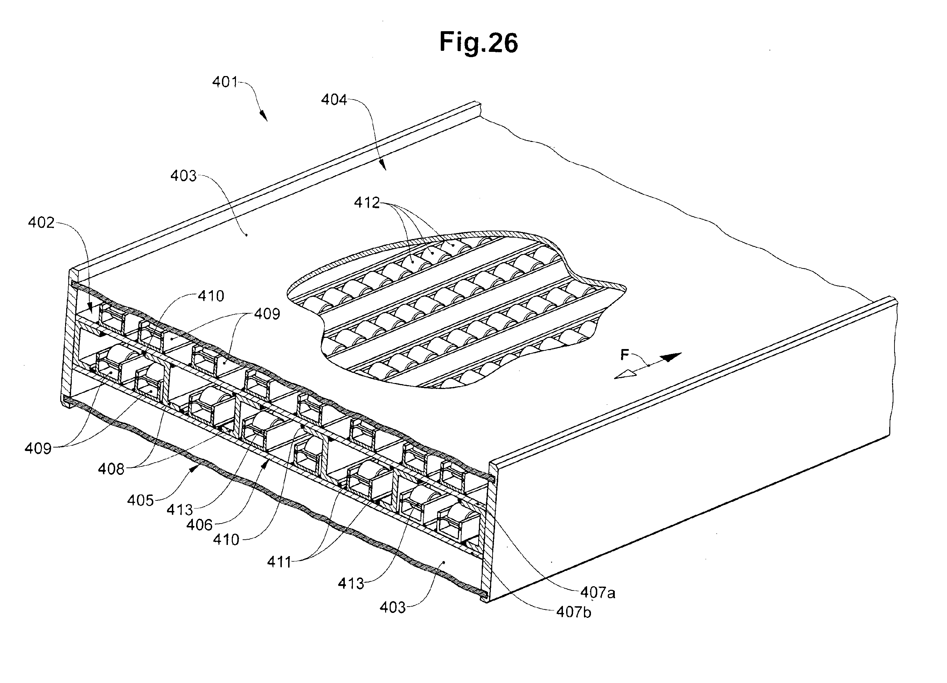

Die Figur 26 zeigt eine Teilansicht einer weiteren Ausführungsform einer Fördereinrichtung 401, insbesondere der dazugehörigen Abstützvorrichtung 402. Die vorliegende Ausführungsform weist einen ähnlichen Aufbau auf wie die Fördereinrichtung 301 nach Figur 17 und 23 jedoch mit den nachfolgend genannten Unterschieden.

Die Fördereinrichtung 401 umfasst ebenfalls ein Förderorgan in Form eines Förderbandes 403 mit einem oberen Trum 404 und einem unteren Trum 405, welches in zwei, einander gegenüber liegenden Kopfendbereichen (nicht gezeigt) umgelenkt wird. Zwischen den beiden Kopfendbereichen ist eine Abstützvorrichtung 402 zur rollenden Abstützung des oberen Trums 404 angeordnet.

Die Abstützvorrichtung 402 enthält einen flächig ausgedehnten Stützkörper 406, welcher jeweils ein oberes, dem oberen Trum 404 zugewandtes und unteres, dem unteren Trum 405 zugewandtes Plattenelement 407a, 407b aus z. B. Metall, wie Aluminium, oder aus Kunststoff umfasst. Die beiden Plattenelemente 407a, 407b werden durch Verbindungsprofile 408, welche zwischen diesen angeordnet sind, zusammengehalten und voneinander beabstandet. Die Verbindungsprofile 40 sind hier beispielhaft Z- bzw. S-förmig ausgebildet. Die Verbindungsprofile 408 bestehen z. B. ebenfalls aus Metall, wie Aluminium, oder aus Kunststoff.

Auf dem ersten, dem oberen Trum 404 zugewandten Plattenelement 407a sind zum oberen Trum 404 hin Aufnahmekörper in Form von parallel nebeneinander und parallel zur Bewegungsrichtung des Förderbandes 403 verlaufenden C- bzw. U-förmigen Aufnahmeprofilen 409 angebracht. Die Aufnahmeprofilen 409 bilden einen Aufnahmeraum für in Bewegungsrichtung des Förderbandes 403 hintereinander angeordnete Stützrollen 412 aus. Die Stützrollen 412 sind hierzu rollend in den Aufnahmen der Aufnahmeprofile 409 geführt.

Im Zwischenraum zwischen den beiden Plattenelementen 407a, 407b sind ebenfalls parallel zur Bewegungsrichtung des Förderbandes 403 verlaufenden C- bzw. U-förmigen Aufnahmeprofilen 409 angeordnet. Die Aufnahmeprofile 409 sind hierzu auf dem unteren, dem unteren Trum 405 zugewandten Plattenelement 407b angebracht.

Die genannten Aufnahmeprofile 409 sind insbesondere als Längsprofile ausgebildet. Sie können aus Kunststoff oder aus Metall, wie Aluminium, sein.

Der Stützkörper 406 weist sowohl auf seiner, dem oberen Trum 404 zugewandten Flächenseite als auch zwischen den Plattenelementen 407a, 407b jeweils vertikal übereinander angeordnete Aufnahmeprofile 409 auf.

Paarweise übereinander angeordnete und vertikal aufeinander ausgerichtete Aufnahmeprofile 409 bilden zusammen mit endseitig angeordneten Verbindungskörpern (nicht gezeigt) jeweils eine um den Stützkörper 406 umlaufende Umlaufbahn U für die Stützrollen 412 aus.

Die Stützrollen 412 werden also in den übereinander angeordneten Aufnahme-profilen 409 um den Stützkörper 406 umlaufend geführt.

Die Stützrollen 412 sind ferner über einen flachen, flexiblen Verbindungskörper 413 zu einem Rollenkörper verbunden.

Die Verbindungsprofile 408 sind mit den Plattenelementen 407a, 407b unter Ausbildung von flächigen Klebeverbindungen 410 über Profilwände flächig verklebt. Die Längsprofile 409 sind ebenfalls unter Ausbildung von flächigen Klebeverbindungen 411 über den Profilboden mit den diesen zugeordneten Plattenelementen 407b verklebt. Anstelle von Klebeverbindungen sind auch Schweissverbindungen denkbar.

Durch die andersartige Anordnung der die Stützrollen 412 zurückführenden, unteren Aufnahmeprofile 409, kann der untere Trum 405 des Förderbandes 403 im Gegensatz zum Ausführungsbeispiel nach Figur 17 und 23 nicht an den zurückgeführten Stützrollen 412 abrollen. Die Stützrollen 412 werden vielmehr im Zwischenraum zwischen den beiden Plattenelementen 407a, 407b geschützt zurückgeführt.

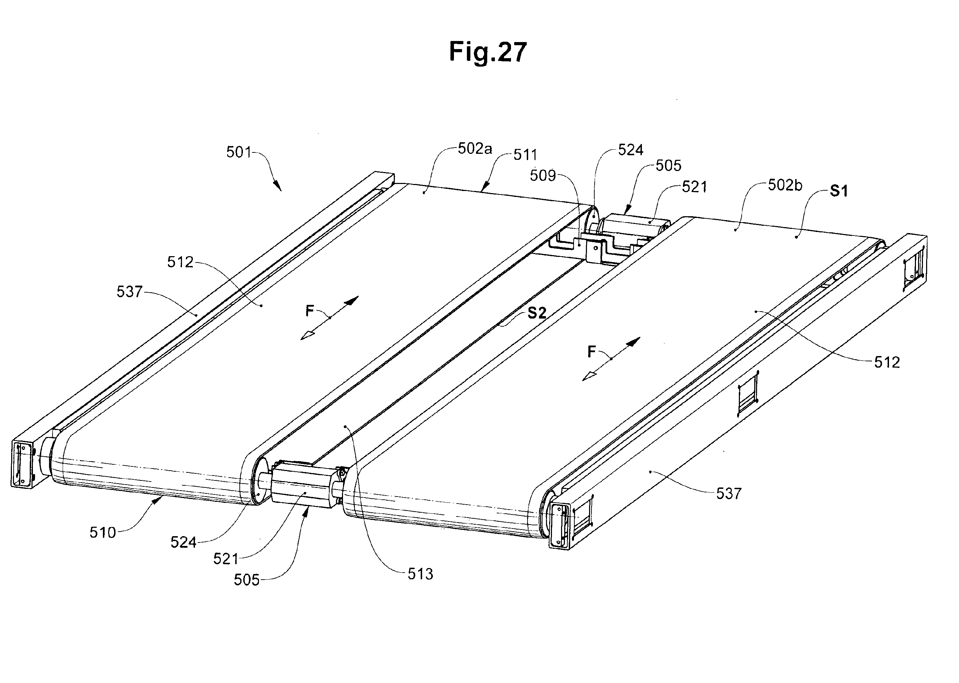

Die in Figur 27 gezeigte weitere Ausführungsform einer erfindungsgemässen Fördereinrichtung zeichnet sich wiederum durch zwei parallel nebeneinander und voneinander beabstandete Förderbänder 502a, 502b aus. Anstelle von Förderbändern 502a, 502b sind z. B. auch Mattenketten möglich.

Die beiden Förderbänder 502a, 502b werden in einem gemeinsamen ersten und zweiten Kopfendbereich 510, 511 jeweils umgelenkt. In beiden Kopfendbereichen 510, 511 ist hierzu eine Antriebsvorrichtung 505 gemäss Figur 1 und 2 vorgesehen, welche neben der Umlenkung des endlosen Förderbandes 502a, 502b auch für dessen Antrieb sorgt. Zum Antreiben und Umlenken der Förderbänder 502a, 502b sind Antriebsorgane 524 vorgesehen, um welche die Förderbänder 502a, 502b teilumfänglich geschlungen sind. Die Antriebsorgane sind hier als Antriebsrollen ausgebildet.

Für eine detaillierte Beschreibung der Antriebsvorrichtung 505 wird auf die Figuren 1 und 2 sowie auf die dazugehörige Beschreibung verwiesen.

Der zur Antriebsvorrichtung 505 gehörige Antriebsmotor 521 ist mittig im freien Spalt zwischen den beiden Förderbändern 502a, 502b angeordnet. Die Antriebsmotoren 521 sind wie bereits im Zusammenhang mit den Figuren 1 und 2 beschrieben an einem Querbauteil 509 befestigt. Auch hierzu wird auf die entsprechende Beschreibung zu Figur 1 und 2 verwiesen.

Die beiden Förderbänder 502a, 502b sind zwischen zwei längslaufenden Seitenabschlussvorrichtungen 537 angeordnet. An den Seitenabschlussvorrichtungen 537 sind auch die Antriebsvorrichtungen 505 mit ihren seitlichen Endabschnitten befestigt. Auch hierzu wird auf die entsprechende Beschreibung zu Figur 1 und 2 verwiesen.

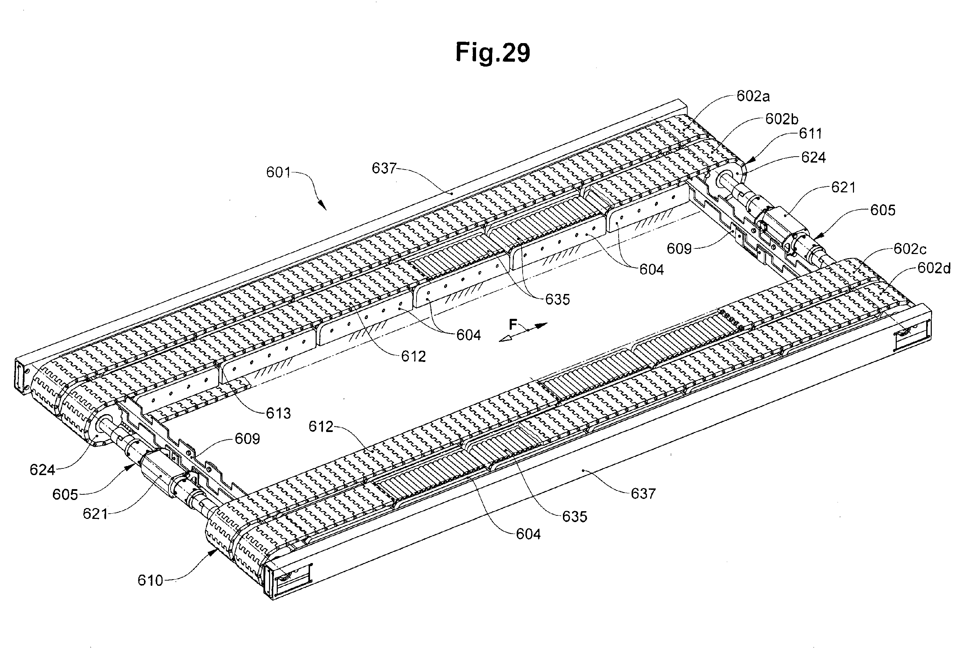

Die Figur 29 zeigt eine weitere Ausführungsform einer erfindungsgemässen Fördereinrichtung 601, welche der Ausführungsform nach Figur 27 bezüglich Antriebsanordnung ähnlich ist. Die vorliegende Ausführungsform zeichnet sich durch zwei Paare von parallel nebeneinander und voneinander beabstandete Mattenketten 602a, 602b; 602c, 602d aus.

Die beiden Mattenkettenpaare 602a, 602b; 602c, 602d werden in einem gemeinsamen ersten und zweiten Kopfendbereich 610, 611 jeweils umgelenkt. In beiden Kopfendbereichen 610, 611 ist hierzu eine Antriebsvorrichtung 605 gemäss Figur 1 und 2 vorgesehen, welche neben der Umlenkung der beiden endlos geführten Mattenkettenpaare 602a, 602b; 602c, 602d auch für deren Antrieb sorgt. Zum Antreiben und Umlenken der beiden Mattenkettenpaare 602a, 602b; 602c, 602d sind Antriebszahnräder 624 vorgesehen, um welche die Mattenkettenpaare 602a, 602b; 602c, 602d teilumfänglich geschlungen sind. Die Mattenketten 602a, 602b; 602c, 602 weisen hierzu Erhöhungen bzw. Vertiefungen auf, welche in einen, vorzugsweise formschlüssigen, Eingriff mit korrespondierenden Erhöhungen bzw. Vertiefungen am Antriebszahnrad 624 treten. Für eine detaillierte Beschreibung der Antriebsvorrichtung 605 wird ebenfalls auf die Figuren 1 und 2 sowie auf die dazugehörige Beschreibung verwiesen.

Der jeweils zur Antriebsvorrichtung 605 gehörige Antriebsmotor 521 ist mittig im freien Spalt zwischen den beiden Mattenkettenpaaren 602a, 602b; 602c, 602d angeordnet. Die Antriebsmotoren 621 sind wie bereits im Zusammenhang mit den Figuren 1 und 2 beschrieben an einem Querbauteil 609 befestigt. Auch hierzu wird auf die entsprechende Beschreibung zu Figur 1 und 2 verwiesen.

Jedes Mattenkettenpaar 602a, 602b; 602c, 602d besteht wiederum aus zwei parallel nebeneinander endlos geführten Mattenketten 602a, 602b; 602c, 602d. Die Mattenketten können unmittelbar nebeneinander liegen oder über einen Spalt voneinander beabstandet sein. Dieser Spalt ist jedoch wesentlich kleiner als der Spalt zwischen zwei Paaren von Mattenketten 602a, 602b; 602c, 602d.

Die beiden Mattenkettenpaare 602a, 602b; 602c, 602d sind zwischen zwei längslaufenden Seitenabschlussvorrichtungen 637 angeordnet. An den Seitenabschlussvorrichtungen 637 sind auch die Antriebsvorrichtungen 605 mit ihren seitlichen Endabschnitten befestigt. Auch hierzu wird auf die entsprechende Beschreibung zu Figur 1 und 2 verwiesen.

Im Weiteren enthält die Fördereinrichtung 601 eine Abstützvorrichtung mit einer Mehrzahl von in Förderrichtung F hintereinander sowie zwischen den Kopfenden bzw. Kopfendbereichen angeordneten Abstützeinheiten. Die Abstützeinheiten sind jeweils zwischen dem oberen und unteren Trum 612, 613 der Mattenkettenpaare 602a, 602b; 602c, 602d angeordnet. Die Abstützeinheiten 604 entsprechen den in den Figuren 9. 10 sowie 16, 18, 19 gezeigten und beschriebenen Abstützeinheiten. Für weitere Details zum Aufbau und zur Anordnung der Abstützeinheiten sei auf die entsprechende Beschreibung zu den genannten Figuren verwiesen.

Die Mattenketten 602a, 602b; 602c, 602d werden im Bereich des oberen Trums 612 durch den Rollenkörper 635 der Abstützeinheit 604 abrollend abgestützt wird. Der Rollenkörper 635 enthält wie bereits beschrieben eine Mehrzahl einzelner Rollen welche um einen Stützkörper der Abstützeinheit 604 umlaufend geführt sind.

Die Fördereinrichtung 501, 601 gemäss den Figuren 27 und 29 eignet sich insbesondere als Lagerraumfördereinrichtung für ein Lagersystem mit Palettenstellplätzen, insbesondere für ein Hochregallager. Die beiden voneinander beabstandeten Förderbänder 502a, 502b bzw. Mattenketten-Paare 602a, 602b; 602c, 602d bilden jeweils eine Förderspur für die Auflagebereiche einer Palette aus.

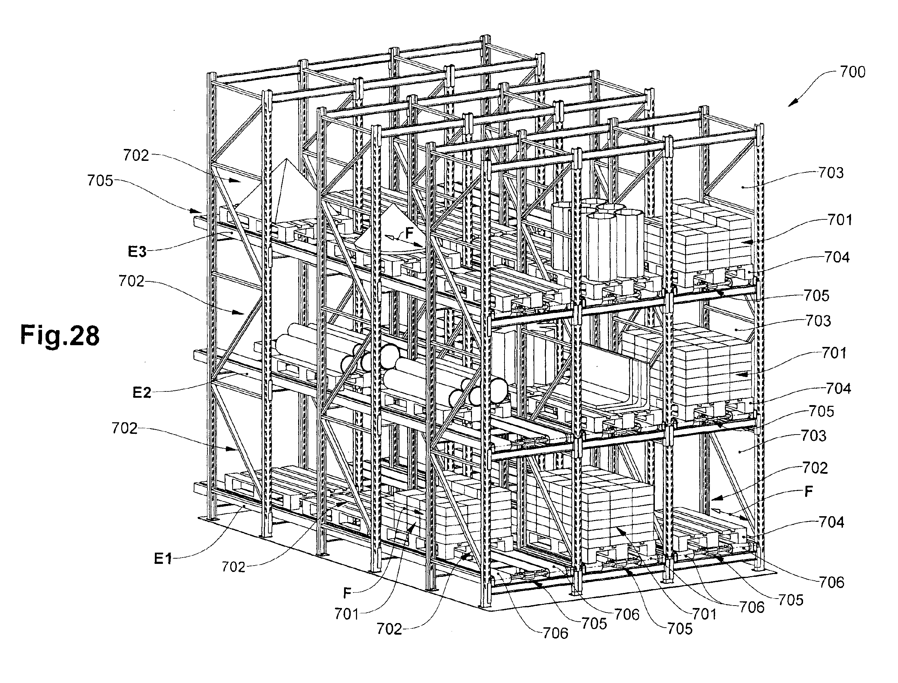

Die Figur 28 zeigt ein Hochregallagersystem 700 mit in drei Dimensionen angeordneten Palettenstellplätzen 702. Das Hochregallagersystem 700 weist eine Mehrzahl von übereinander angeordneten Lagerebenen E1, E2, E3 auf, wobei in jeder Lagerebene E1, E2, E3 eine Mehrzahl von Palettenstellplätzen 702 vorgesehen sind. Das Lagersystem 700 weist eine Mehrzahl von übereinander und nebeneinander angeordneten Abgabe- und Entnahmestellen 703 auf. Jeder dieser Abgabe- und Entnahmestelle 703 ist eine Mehrzahl von in Förderrichtung F hintereinander in einer Reihe und auf einer Lagerebene E1, E2, E3 angeordneten Palettenstellplätzen 702 zugeordnet.

Die Abgabestelle kann der Entnahmestelle entsprechen, so dass das palettierte Lagergut 701 an derselben Stelle an das Lagersystem 700 abgegeben und von diesem wieder entnommen wird. Die Abgabestelle und Entnahmestelle 703 können jedoch auch ortsgetrennt sein, und z. B. einander gegenüber liegen. In diesem Fall wird das Lagergut 701 an der Abgabestelle abgegeben und an der Entnahmestelle entnommen (nicht gezeigt).

Zum Einlagern von palettiertem Lagergut 701 wird dieses an der Abgabestelle 703 abgegeben und über die erfindungsgemässe Fördereinrichtung 705 auf den vorgesehenen Palettenstellplatz 702 gefördert. Das palettierte Lagergut 701 wird auf der Fördereinrichtung 705 gelagert.

Die Fördereinrichtung 705 kann z. B. eine Fördereinrichtung 501, 601 nach Figur 27 oder 29 sein.

Zur Entnahme des palettierten Lagergutes 701 wird in umgekehrter Reihenfolge das Lagergut 701 über die erfindungsgemässe Fördereinrichtung 705 der Entnahmestelle 703 zugefördert und an dieser entnommen.

Die Übergabe des palettierten Lagergutes 701 an die Abgabestelle 703 und die Übernahme des Lagergutes 701 von der Entnahmestelle 703 geschieht z. B. über Transportgeräte wie Hubstapler oder Hubwagen (nicht gezeigt).

Gemäss einer besonderen Ausführungsvariante weist jeder Paletteneinstellplatz 702 eine erfindungsgemässe, unabhängige und individuell steuerbare Fördereinrichtung 705 auf. Die Fördereinrichtungen 705 mehrerer, in Förderrichtung F in einer Reihe hintereinander angeordneter Paletteneinstellplatz 702 mit jeweils gemeinsamer Abgabe- und/oder Entnahmestelle 703 sind entsprechend ebenfalls in Reihe hintereinander angeordnet. Das Förderorgan 706, wie Förderband oder Mattenkette, erstreckt sich hier jeweils nur über die Längsausdehnung des Paletteneinstellplatz 702 in Förderrichtung F.

Das palettierte Lagergut 701, welches einem Paletteneinstellplatz 702 zugeführt oder von diesem weggeführt werden muss, lässt sich nun über die einzelnen Fördereinrichtungen 705 hinweg vom Paletteneinstellplatz 702 zur Entnahmestelle 703 oder von der Abgabestelle 703 zum Paletteneinstellplatz 702 fördern. Bei diesem Vorgang wird das palettierte Lagergut 701 jeweils von der einen Fördereinrichtung 705 auf die in Förderrichtung F benachbarte bzw. nachfolgende Fördereinrichtung 705 geschoben bzw. von dieser übernommen.

Es kann jedoch auch vorgesehen sein, dass für eine Reihe von in Förderrichtung F hintereinander angeordneter Paletteneinstellplätzen 702 mit jeweils gemeinsamer Abgabe- und/oder Entnahmestelle 703 eine gemeinsame, erfindungsgemässe Fördereinrichtung 705 vorgesehen ist, dessen Förderorgan, wie Förderband oder Mattenkette, sich über sämtliche Paletteneinstellplätze 702 erstreckt.

## Patentansprüche

1. Fördereinrichtung (1, 51, 81, 91), umfassend:
- zwei voneinander beabstandete und in Förderrichtung (F) parallel zueinander verlaufende Seitenabschlussvorrichtungen (37, 57),
- wenigstens ein zwischen den Seitenabschlussvorrichtungen (37, 57) umlaufend angeordnetes, flächig ausgedehntes Förderorgan (2, 52, 75, 82, 92) mit einem oberen Trum (12, 62) und einem unteren Trum (13, 63), welches in zwei, voneinander beabstandeten Kopfendbereichen (10, 87; 11, 88) umgelenkt wird,
- mindestens eine Antriebsvorrichtung (5, 46, 55) mit mindestens einem elektrischen Antriebsmotor (21, 44) und mit mindestens einer, mit dem mindestens einen Antriebsmotor (21, 44) gekoppelten Antriebswelle (25) mit mindestens einem Antriebsorgan (24, 67) zum direkten Antrieb des Förderorgans (2, 52, 75, 82, 92), welches das Antriebsorgan (24, 67) wenigstens teilweise umschlingt,
wobei die Antriebsvorrichtung (5, 46, 55) eine Umlenkstelle für das Förderorgan (2, 52, 82, 92) ausbildet, und die mindestens eine Antriebsvorrichtung (5) innerhalb der Fördereinrichtung (1, 51, 81, 91) in einem Kopfendbereich (10, 87; 11, 88):
- zwischen einer durch den oberen Trum (12, 62) ausgebildeten Förderebene (S1) und einer durch den unteren Trum (13, 63) ausgebildeten Rückführebene (S2), und
- entlang der Förderrichtung (F) zwischen den beiden Kopfenden (10a, 87a; 11a, 88a), sowie
- zwischen den Seitenabschlussvorrichtungen (37, 57) angeordnet ist,
**dadurch gekennzeichnet, dass**
die Fördereinrichtung (1, 51, 81, 91) eine zwischen den Seitenabschlussvorrichtungen (37, 57) angeordnete Abstützvorrichtung (3) mit wenigstens einer Abstützeinheit (4) mit Rollen (33, 78) zur rollenden Abstützung des Förderorgans (2, 52, 82, 92) umfasst, und
der mindestens eine Antriebsmotor (21) zum Abgreifen eines Drehmomentes von zwei einander gegenüber liegenden und in einer gemeinsamen Achse liegenden Stellen am Antriebsmotor (21) ausgelegt ist, und der Antriebsmotor (21) mit beidseitig angeordneten Antriebswellen (25) gekoppelt ist,
oder
die Drehachse der Motorwelle (47) in einem Winkel (α) zur Drehachse der Antriebswellen (25) liegt und das Drehmoment über eine als Winkelgetriebe ausgebildete Getriebeeinheit (45) von der Motorwelle (47) auf die beidseitig angeordneten Antriebswellen (25) übertragen wird.

2. Fördereinrichtung gemäss Anspruch 1, **dadurch gekennzeichnet, dass** die Antriebsvorrichtung zwei oder mehr als zwei Antriebsmotoren enthält.

3. Fördereinrichtung gemäss Anspruch 1 oder 2, **dadurch gekennzeichnet, dass** die geometrischen Drehachsen der Motorwelle (31) und der Antriebswelle (25) in einer gemeinsamen Ebene und vorzugsweise kongruent zueinander angeordnet sind.

4. Fördereinrichtung gemäss einem der Ansprüche 1 bis 3, **dadurch gekennzeichnet, dass** die Antriebswellen (25) zentrisch in der geometrischen Drehachse der Antriebsvorrichtung (5, 55) angeordnet und drehbar gelagert sind.

5. Fördereinrichtung gemäss einem der Ansprüche 1 bis 4, **dadurch gekennzeichnet, dass** der mindestens eine Antriebsmotor (21) beidseitig von diesem wegführende Motorwellenabschnitte (31) umfasst, welche direkt oder indirekt mit den beidseitig angeordneten Antriebswellen (25) gekoppelt sind.

6. Fördereinrichtung gemäss einem der Ansprüche 1 bis 5, **dadurch gekennzeichnet, dass** der mindestens eine Antriebsmotor (21) an einem Querbauteil (9) befestigt ist und das Querbauteil (9) vorzugsweise beidseitig direkt oder indirekt an der Seitenabschlussvorrichtung (37) befestigt ist.

7. Fördereinrichtung gemäss einem der Ansprüche 1 bis 6, **dadurch gekennzeichnet, dass** beidseits vom mindestens einen Antriebsmotor (21) jeweils eine Getriebeeinheit (22) am Antriebsmotor (21) angebracht ist, welche das Drehmoment von der Motorwelle (31) abnimmt, und die Getriebewellen (32) der Getriebeeinheiten (22) direkt oder indirekt mit den Antriebswellen (25) verbunden sind, wobei die Getriebewellen (32), die Antriebswellen (25) und die Motorwelle (31) koaxial angeordnet sind.

8. Fördereinrichtung gemäss einem der Ansprüche 1 bis 7, **dadurch gekennzeichnet, dass** das Antriebsorgan (24, 67) ein drehfest an der Antriebswelle (25) angebrachte Antriebsrolle oder Antriebszahnrad ist.

9. Fördereinrichtung gemäss einem der Ansprüche 1 bis 8, **dadurch gekennzeichnet, dass** die Antriebswellen (25) beidseits der Antriebsvorrichtung (5) an der jeweiligen Seitenabschlussvorrichtung (37) oder an mit dieser verbundenen Lagerungselementen (7) drehgelagert und axial gesichert sind.

10. Fördereinrichtung gemäss einem der Ansprüche 1 bis 9, **dadurch gekennzeichnet, dass** die Antriebsvorrichtung (5) einen spiegelsymmetrischen Aufbau aufweist, wobei ein Antriebsmotor (21) mittig angeordnet ist.

11. Fördereinrichtung gemäss einem der Ansprüche 1 bis 10, **dadurch gekennzeichnet, dass** die Fördereinrichtung (1, 51, 81, 91) einen Transformator (15) zur Speisung des Antriebsmotors (21) mit einer elektrischen Spannung umfasst, wobei der Transformator (15) innerhalb der Fördereinrichtung (1, 51, 81, 91):
- zwischen Seitenabschlussvorrichtungen (37, 57) sowie
- zwischen einer durch den oberen Trum (12, 62) ausgebildeten Förderebene (S1) und einer durch den unteren Trum (13, 63) ausgebildeten Rückführebene (S2), und
- entlang der Förderrichtung (F) zwischen den beiden Kopfenden (10a, 87a; 11a, 88a)
angeordnet ist.

12. Fördereinrichtung gemäss einem der Ansprüche 1 bis 11, **dadurch gekennzeichnet, dass** die Fördereinrichtung (1, 51, 81, 91) eine Steuerungseinheit (17) zum Steuern der Antriebsvorrichtung (5) umfasst, wobei die Steuerungseinheit (17) innerhalb der Fördereinrichtung (1, 51, 81, 91):
- zwischen Seitenabschlussvorrichtungen (37, 57) sowie
- zwischen einer durch den oberen Trum (12, 62) ausgebildeten Förderebene (S1) und einer durch den unteren Trum (13, 63) ausgebildeten Rückführebene (S2), und
- entlang der Förderrichtung (F) zwischen den beiden Kopfenden (10a, 87a; 11a, 88a)
angeordnet ist.

13. Fördereinrichtung gemäss einem der Ansprüche 1 bis 12, **dadurch gekennzeichnet, dass**:
a. die Abstützvorrichtung bzw. Abstützeinheit eine oder mehrere ortsfest axial drehbar gelagerte Rollen umfasst, oder
b. die Abstützeinheit (4) einen Stützkörper (36) und einen Rollenkörper (35) mit einer Vielzahl von Rollen aufweist, welche in einem geschlossenen Kreislauf um den Stützkörper (36) umlaufend angeordnet sind, oder
c. das Förderorgan (75, 75') an seiner der Abstützvorrichtung (77) zugewandten Flächenseite am Förderorgan (75, 75') ortsfest und axial drehbar gelagerte Rollen (78, 78') enthält.

14. Fördereinrichtung gemäss einem der Ansprüche 1 bis 13, **dadurch gekennzeichnet, dass** das Förderorgan (2) einteilig oder mehrteilig ausgebildet ist.

15. Fördereinrichtung gemäss einem der Ansprüche 1 bis 14, **dadurch gekennzeichnet, dass** die Fördereinrichtung (1) ein der Antriebsvorrichtung (5) zugeordnetes Umlenkorgan (40) enthält, welches das Förderorgan (2) im Bereich des unteren Trums (13) zum Antriebsorgan (24) hin umlenkt, so dass der Umschlingungswinkel des Förderorgans (2) um das wenigstens eine Antriebsorgan (24) mehr als 180° beträgt.

16. Fördereinrichtung gemäss einem der Ansprüche 1 bis 15, **dadurch gekennzeichnet, dass** sowohl der erste als auch der zweite Kopfendbereich (10, 11) mit einer Antriebsvorrichtung (5, 46, 55) gemäss den Ansprüchen 1 bis 15 ausgerüstet ist.

17. Fördereinrichtung gemäss einem der Ansprüche 1 bis 16, **dadurch gekennzeichnet, dass** Mittel (204, 205, 206, 207, 211; 304, 305, 306, 307, 311) vorgesehen sind, welche erlauben die entlang der Drehachse angeordneten Antriebsorgane mit unterschiedlichen Winkelgeschwindigkeiten zu betreiben.

18. Fördereinrichtung (101) nach einem der Ansprüche 1 bis 17,
**dadurch gekennzeichnet, dass**
die Abstützvorrichtung (102) einen flächig ausgedehnten Stützkörper (106) enthält, welcher zwei Flächenelemente (107a, 107b) umfasst, die durch Verbindungsprofile (108), welche zwischen den Flächenelementen (107a, 107b) angeordnet sind, zusammengehalten und voneinander beabstandet werden, und auf den Flächenelementen (107a, 107b) Aufnahmekörper (109) angebracht sind, welche Stützrollen (112) bzw. Rollenkörper zur Abstützung des oberen Trums (104) aufnehmen.

19. Fördereinrichtung gemäss einem der Ansprüche 1 bis 18, **dadurch gekennzeichnet, dass** die Fördereinrichtung (501, 601), in Förderrichtung (F) betrachtet, mehrere parallel nebeneinander angeordnete Förderorgane (502a, 502b; 620a, 620b; 620c, 620d) enthält, und die Förderorgane (502a, 502b; 620a, 620b; 620c, 620d) über wenigstens eine gemeinsame Antriebsvorrichtung (505, 605) angetrieben und umgelenkt werden.

20. Verwendung der Fördereinrichtung (1) nach einem der Ansprüche 1 bis 19 als:
- Werker-Mitfahrband (91),
- Lagerraumfördereinrichtung (705) oder als
- Laderaumfördereinrichtung (80).

## Claims

1. A conveying device (1, 51, 81, 91), comprising:
• two side limitation devices (37, 57) which are distanced to one another and run parallel to one another in the conveying direction (F),
• at least one extensively extended conveying member (2, 52, 75, 82, 92) with an upper run section (12, 62) and a lower run section (13, 63), said conveying member being arranged in a revolving manner between the side limitation devices (37, 57) and being deflected in two head-end regions (10, 87; 11, 88) distanced to one another,
• at least one drive device (5, 46, 55) with at least one electrical drive motor (21, 44) and with at least one drive shaft (25) coupled to the at least one drive motor (21, 44) and having at least one drive member (24, 67) for the direct drive of the conveying member (2, 52, 75, 82, 92) at least partly wrapping the drive member (24, 67),
wherein the drive device (5, 46, 55) forms a deflection location for the conveying member (2, 52, 82, 92), and the at least one drive device (5) within the conveying device (1, 51, 81, 91) is arranged in a head-end region (10, 87; 11, 88):
• between a conveying plane (S1) formed by the upper run section (12, 62) and a return plane (S2) formed by the lower run section (13, 63), and
• along the conveying direction (F) between the two head-ends (10a, 87a; 11a, 88a) as well as
• between the side limitation devices (37, 57).
**characterised in that** the conveying device (1, 51, 81, 91) comprises a support device (3) with at least one support unit (4) with rollers (33, 78) for the rolling support of the conveying member (2, 52, 82, 92), said support device being arranged between the side limitation devices (37, 57), and
the at least one drive motor (21) is designed for picking up a torque from two locations on the drive motor (21) which lie opposite one another and lie in a common axis, and the drive motor (21) is coupled to drive shafts (25) arranged on both sides, or the rotation axis of the motor shaft lies at an angle (α) to the rotation axis of the drive shaft (25) and the torque is transmitted via a gear unit (45) designed as an angular gear, from the motor shaft (47) onto the drive shafts (25) arranged on both sides.

2. A conveying device according to claim 1, **characterised in that** the drive device comprises two, or more than two, drive motors.

3. A conveying device according to claim 1 or 2, **characterised in that** the geometric rotation axes of the motor shaft (31) and of the drive shaft (25) are arranged in a common plane and preferably congruently to one another.

4. A conveying device according to one of the claims 1 to 3, **characterised in that** the drive shafts (25) are arranged and rotatably mounted centrically in the geometric rotation axis of the drive device (5, 55).

5. A conveying device according to one of the claims 1 to 4, **characterised in that** the at least one drive motor (21) comprises motor shaft sections (31), which lead away from this on both sides, and which are coupled directly or indirectly to the drive shafts (25) arranged on both sides.

6. A conveying device according to one of the claims 1 to 5, **characterised in that** the at least one drive motor (21) is fastened on a transverse component (9), and the transverse component (9) is fastened preferably on both sides directly or indirectly on the side limitation device (37).

7. A conveying device according to one of the claims 1 to 6, **characterised in that** in each case a gear unit (22) is attached on the drive motor (21) on both sides of at the least one drive motor (21), which takes the torque from the motor shaft (31), and the gear shafts (32) of the gear units (22) are connected directly or indirectly to the drive shafts (25), wherein the gear shafts (32), the drive shafts (25) and the motor shaft (31) are arranged coaxially.

8. A conveying device according to one of the claims 1 to 7, **characterised in that** the drive member (24, 67) is a drive roller or drive cog which is attached on the drive shaft (25) in a rotationally fixed manner.

9. A conveying device according to one of the claims 1 to 8, **characterised in that** the drive shafts (25) are rotatably mounted and axially secured on both sides of the drive device (5) on the respective side limitation device (37) or on mounting elements (7) connected to this.

10. A conveying device according to one of the claims 1 to 9, **characterised in that** the drive device (5) has a mirror-symmetric construction, wherein a drive motor (21) is arranged centrally.

11. A conveying device according to one of the claims 1 to 10, **characterised in that** the conveying device (1, 51, 81, 91) comprises a transformer (15) for feeding the drive motor (21) with an electric voltage, wherein the transformer (15) within the conveying device (1, 51, 81, 91) is arranged:
• between side limitation devices (37, 57) as well as
• between a conveying plane (S1) formed by the upper run section (12, 62) and a return plane (S2) formed by the lower run section (13, 63), and
• along the conveying direction (F) between the two head-ends (10a, 87a;11a, 88a).

12. A conveying device according to one of the claims 1 to 11, **characterised in that** the conveying device (1, 51, 81, 91) comprises a control unit (17) for controlling the drive device (5), wherein the control unit (17) within the conveying device (1, 51, 81, 91) is arranged:
• between side limitation devices (37, 57) as well as
• between a conveying plane (S1) formed by the upper run section (12, 62) and a return plane (S2) formed by the lower run section (13, 63), and
• along the conveying direction (F) between the two head-ends (10a, 87a;11a, 88a).

13. A conveying device according to one of the claims 1 to 12, **characterised in that**
a. the support device or support unit comprises one or more stationarily axially rotatably mounted rollers, or
b. the support unit (4) comprises a support body (36) and a rolling body (35) with a multitude of rollers, which are revolvingly arranged in a closed circuit around the support body (36), or
c. the conveying member (75, 75') comprises rollers (78, 78') at its flat side facing the support device (77), which rollers are stationarily and axially rotatably mounted on the conveying member (75, 75').

14. A conveying device according to one of the claims 1 to 13, **characterised in that** the conveying member (2) is designed in a single-part or multi-part manner.

15. A conveying device according to one of the claims 1 to 14, **characterised in that** the conveying device (1) comprises a deflection member (40) assigned to the drive device (5), which deflects the conveying member (2) in the region of the lower run section (13) toward the drive member (24), so that the wrapping angle of the conveying member (2) around the at least one drive member (24) is more than 180°.

16. A conveying device according to one of the claims 1 to 15, **characterised in that** the first as well as the second head-end region (10, 11) is provided with a drive device (5, 46, 55) according to the claims 1 to 15.

17. A conveying device according to one of the claims 1 to 16, **characterised in that** means (204, 205, 206, 207, 211; 304, 305, 306, 307, 311) are provided, which permit the drive members arranged along the rotation axis to be operated at different angular speeds.

18. A conveying device (101) according to one of the claims 1 to 17, **characterised in that** the support device (102) comprises an extensively extended support body (106) comprising two surface elements (107a, 107b), which are held together and distanced to one another by way of connection profiles (108) arranged between the surface elements (107a, 107b), and receiver bodies (109) are attached on the surface elements (107a, 107b) and receive support rollers (112) or rolling bodies for the support of the upper run section (104).

19. A conveying device according to one of the claims 1 to 18, **characterised in that** the conveying device (501, 601), seen in the conveying direction (F), comprises several conveying members (502a, 502b; 620a, 620b; 620c, 620d) which are arranged parallel next to one another, and the conveying members (502a, 502b; 620a, 620b; 620c, 620d) are driven and deflected via at least one common drive device (505, 605)

20. The use of the conveying device (1) according to one of the claims 1 to 19 as:
• worker-rider belt (91),
• storage space conveying device (705), or as
• loading space conveying device (80).

## Revendications

1. Dispositif de transport (1, 51, 81, 91) comprenant :
deux ensembles (37, 57) de fermeture latérale qui s'étendent à distance l'un de l'autre et parallèlement l'un à l'autre dans la direction de transport (F),
au moins un organe de transport (2, 52, 75, 82, 92) étendu à plat, disposé en boucle entre les ensembles (37, 57) de fermeture latérale et présentant un brin supérieur (12, 62) et un brin inférieur (13, 63) qui est renvoyé dans deux parties (10, 87; 11, 88) d'extrémité de tête maintenues à distance l'une de l'autre,
au moins un ensemble d'entraînement (5, 46, 55) et
au moins un moteur électrique d'entraînement (21, 44) ainsi qu'au moins un arbre d'entraînement (25) accouplé au moteur ou aux moteurs d'entraînement (21, 44) et présentant au moins un organe d'entraînement (24, 67) qui entraîne directement l'organe de transport (2, 52, 75, 82, 92) qui entoure au moins en partie l'organe d'entraînement (24, 67),
l'ensemble d'entraînement (5, 46, 55) formant un emplacement de renvoi pour l'organe de transport (2, 52, 82, 92) et à l'intérieur du dispositif de transport (1, 51, 81, 91) dans une partie (10, 87; 11, 88) d'extrémité de tête, le ou les ensembles d'entraînement (5) étant disposés :
entre un plan de transport (S1) formé par le brin supérieur (12, 62) et un plan de renvoi (S2) formé par le brin inférieur (13, 63),
entre les deux extrémités de tête (10a, 87a; 11a, 88a) le long de la direction de transport (F) ainsi que
entre les ensembles (37, 57) de fermeture latérale, **caractérisé en ce que**
le dispositif de transport (1, 51, 81, 91) comporte un ensemble de soutien (3) disposé entre les dispositifs (37, 57) de fermeture latérale et présentant au moins une unité de soutien (4) dotée de rouleaux (33, 78) qui permettent de soutenir à roulement l'organe de transport (2, 52, 82, 92),
**en ce que** le ou les moteurs d'entraînement (21) sont conçus pour reprendre un couple de rotation par deux emplacements situés l'un en face de l'autre et dans un axe commun du moteur d'entraînement (21), le moteur d'entraînement (21) étant accouplé à des arbres d'entraînement (25) disposés des deux côtés ou
**en ce que** l'axe de rotation de l'arbre moteur (47) forme un angle (α) par rapport à l'axe de rotation des arbres d'entraînement (25) et le couple de rotation est transmis par l'intermédiaire d'une unité de transmission (45), configurée comme transmission oblique, depuis l'arbre moteur (47) jusque sur les arbres d'entraînement (25) disposés des deux côtés.

2. Dispositif de transport selon la revendication 1, **caractérisé en ce que** l'ensemble d'entraînement contient deux ou plus que deux moteurs d'entraînement.

3. Dispositif de transport selon les revendications 1 ou 2, **caractérisé en ce que** les axes de rotation géométrique de l'arbre moteur (31) et de l'arbre d'entraînement (25) sont disposés dans un plan commun et de préférence de manière congruente l'un par rapport à l'autre.

4. Dispositif de transport selon l'une des revendications 1 à 3, **caractérisé en ce que** les arbres d'entraînement (25) sont disposés au centre de l'axe géométrique de rotation de l'ensemble d'entraînement (5, 55) et sont montés à rotation.

5. Dispositif de transport selon l'une des revendications 1 à 4, **caractérisé en ce que** le ou les moteurs d'entraînement (21) comportent sur ses deux côtés des parties (31) en débord d'arbre moteur qui sont accouplées directement ou indirectement aux arbres d'entraînement (25) disposés des deux côtés.

6. Dispositif de transport selon l'une des revendications 1 à 5, **caractérisé en ce que** le ou les moteurs d'entraînement (21) sont fixés sur un composant transversal (9) et **en ce que** le composant transversal (9) est fixé de préférence des deux côtés, directement ou indirectement, sur l'ensemble (37) de fermeture latérale.

7. Dispositif de transport selon l'une des revendications 1 à 6, **caractérisé en ce que** des deux côtés du ou des moteurs d'entraînement (21), une unité de transmission (22) qui prélève le couple de rotation de l'arbre moteur (31) est installée sur le moteur d'entraînement (21), les arbres de transmission (32) des unités de transmission (22) étant raccordées directement ou indirectement aux arbres d'entraînement (25), les arbres de transmission (32), les arbres d'entraînement (25) et l'arbre moteur (31) étant disposés coaxialement.

8. Dispositif de transport selon l'une des revendications 1 à 7, **caractérisé en ce que** l'organe d'entraînement (24, 67) est un rouleau d'entraînement ou une roue dentée d'entraînement placée à rotation solidaire sur l'arbre d'entraînement (25).

9. Dispositif de transport selon l'une des revendications 1 à 8, **caractérisé en ce que** les arbres d'entraînement (25) sont montés à rotation et bloqués axialement des deux côtés de l'ensemble d'entraînement (5) sur chaque ensemble (37) de fermeture latérale ou sur des éléments de montage (7) raccordés à ce dernier.

10. Dispositif de transport selon l'une des revendications 1 à 9, **caractérisé en ce que** l'ensemble d'entraînement (5) présente une structure à symétrie spéculaire avec un moteur d'entraînement (21) disposé au milieu.

11. Dispositif de transport selon l'une des revendications 1 à 10, **caractérisé en ce que** le dispositif d'entraînement (1, 51, 81, 91) comporte un transformateur (15) qui alimente le moteur d'entraînement (21) en tension électrique, le transformateur (15) étant disposé à l'intérieur du dispositif de transport (1, 51, 81, 91) :
entre des ensembles (37, 57) de fermeture latérale,
entre un plan de transport (S1) formé par le brin supérieur (12, 62) et un plan de renvoi (S2) formé par le brin inférieur (13, 63) et
entre les deux extrémités de tête (10a, 87a; 11a, 88a) dans la direction de transport (F).

12. Dispositif de transport selon l'une des revendications 1 à 11, **caractérisé en ce que** le dispositif de transport (1, 51, 81, 91) comporte une unité de commande (17) qui commande l'ensemble d'entraînement (5), l'unité de commande (17) étant disposée à l'intérieur du dispositif de transport (1, 51, 81, 91) :
entre des ensembles (37, 57) de fermeture latérale,
entre un plan de transport (S1) formé par le brin supérieur (12, 62) et un plan de renvoi (S2) formé par le brin inférieur (13, 63) et
entre les deux extrémités de tête (10a, 87a; 11a, 88a) dans la direction de transport (F).

13. Dispositif de transport selon l'une des revendications 1 à 12, **caractérisé en ce que**
a. l'ensemble de soutien ou l'unité de soutien comporte un ou plusieurs rouleaux montés à rotation et fixes dans le sens axial ou
b. l'unité de soutien (4) présente un corps de soutien (36) et un corps de roulement (35) présentant plusieurs rouleaux disposés en circuit fermé autour du corps de soutien (36) ou
c. l'organe de transport (75, 75') contient sur son côté plat tourné vers l'ensemble de soutien (77) des rouleaux (78, 78') montés fixement sur l'organe de transport (75, 75') et à rotation axiale.

14. Dispositif de transport selon l'une des revendications 1 à 13, **caractérisé en ce que** l'organe de transport (2) est configuré en une pièce ou en plusieurs pièces.

15. Dispositif de transport selon l'une des revendications 1 à 14, **caractérisé en ce que** le dispositif de transport (1) contient un organe de renvoi (40) associé à l'ensemble d'entraînement (5) et qui renvoie l'organe de transport (2) au niveau du brin inférieur (13) vers l'organe d'entraînement (24) de telle sorte que l'angle de bouclage de l'organe de transport (2) autour du ou des organes d'entraînement (24) soit supérieur à 180°.

16. Dispositif de transport selon l'une des revendications 1 à 15, **caractérisé en ce que** tant la première que la deuxième partie d'extrémité de tête (10, 11) sont dotées d'un ensemble d'entraînement (5, 46, 55) selon les revendications 1 à 15.

17. Dispositif de transport selon l'une des revendications 1 à 16, **caractérisé en ce que** des moyens (204, 205, 206, 207, 211; 304, 305, 306, 307, 311) sont prévus pour permettre d'entraîner les organes d'entraînement disposés le long de l'axe de rotation à différentes vitesses angulaires.

18. Dispositif de transport (101) selon l'une des revendications 1 à 17, **caractérisé en ce que** l'ensemble de soutien (102) contient un corps de soutien (106) s'étendant à plat qui comporte deux éléments plats (107a, 107b) maintenus ensemble et à distance l'un de l'autre par des profils de liaison (108) disposés entre les éléments plats (107a, 107b), les corps de reprise (109) qui reprennent des rouleaux de soutien (112) ou des corps de rouleaux soutenant le brin supérieur (104) étant installés sur les éléments plats (107a, 107b).

19. Dispositif de transport selon l'une des revendications 1 à 18, **caractérisé en ce que** le dispositif de transport (501, 601) contient plusieurs organes de transport parallèles (502a, 502b; 620a, 620b; 620c, 620d) disposés les uns à côté des autres dans la direction de transport (F), les organes de transport (502a, 502b; 620a, 620b; 620c, 620d) étant entraînés et déviés par au moins un ensemble commun d'entraînement (505, 605).

20. Utilisation du dispositif de transport (1) selon l'une des revendications 1 à 19
comme bande d'entraînement (91) dite "Werker" (ouvrier),
comme dispositif de transport (705) pour espace d'entreposage ou
comme dispositif de transport (80) pour espace de chargement.
